# NEW EUROPEAN PATENT SPECIFICATION

(11) **EP 1 964 893 B2**
(45) Date of publication and mention of the opposition decision: **24.11.2021**
(45) Mention of the grant of the patent: 24.01.2018
(21) Application number: 08002529.9
(22) Date of filing: 12.02.2008
(51) Int. Cl.: C09D 11/00

(54) **Ink composition, inkjet recording method, printed material, and ink set**
Tintenzusammensetzung, Tintenstrahlaufzeichnungsverfahren, gedrucktes Material und Tintensatz
Composition d'encre, procédé d'enregistrement à jet d'encre, matériau imprimé et ensemble d'encres

(30) Priority: 26.02.2007 JP 2007044894
(43) Date of publication of application: 03.09.2008
(73) Proprietor: FUJIFILM Corporation, Tokyo 106-8620 (JP)
(72) Inventor: Hayata, Yuuichi, Ashigarakami-gun Kanagawa (JP)
(74) Representative: Hoffmann Eitle

(56) References cited:
- EP-A- 1 477 537
- EP-A- 1 630 213
- EP-A- 1 772 497
- EP-A1- 1 477 537
- EP-A1- 1 630 213
- EP-A1- 1 772 497
- EP-A1- 1 792 952
- EP-A1- 1 892 105
- EP-A1- 1 900 784
- WO-A-99/29787
- WO-A-2005/061634
- WO-A2-99/29787
- WO-A2-2005/006163
- JP-A- 2004 167 873
- US-A1- 2004 017 451
- US-A1- 2004 099 170
- US-A1- 2004 244 641
- US-A1- 2005 080 153
- US-A1- 2005 113 483
- US-A1- 2005 196 697
- US-A1- 2005 219 340
- US-A1- 2006 050 121
- US-A1- 2006 052 473
- , Retrieved from the Internet: URL:https://english.stackexchange.com/ques tions/265973/ratio-expressions-whch-are-co rrect
- , Retrieved from the Internet: URL:https://www.englishclub.com/writinQ/pu nctuation-brackets.htm
- Declaration of Mr. Makuta
- excerpt from catalogue Monomers&Oligomers from Nagase America
- catalogue Monomers&Oligomers from Nagase America

## Description

The present invention relates to an ink composition suitably used for inkjet recording, an inkjet recording method and, furthermore, a printed material obtained by employing the ink composition and a process for producing a lithographic printing plate.

More particularly, it relates to an ink composition suitable for inkjet recording that enables inkjet recording to be carried out stably for a long period of time, cures with high sensitivity upon exposure to actinic radiation, and gives a cured material having sufficient flexibility even after the ink has been cured and having good adhesion to a recording medium; an inkjet recording method; a printed material employing same; and a process for producing a lithographic printing plate employing the ink composition.

With regard to an image recording method for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, the equipment is inexpensive and, since an image is formed directly on a recording medium by discharging an ink only on a required image area, the ink can be used efficiently and the running cost is low. Furthermore, there is little noise and it is excellent as an image recording system.

Furthermore, with regard to the ink jet method, as a method for improving gradation, graininess, etc., a technique in which a dark ink and a light ink are used is known. For example, JP-A-60-56557 and JP-A-57-156264 (JP-A denotes a Japanese unexamined patent application publication) describe a plurality of aqueous dye inks having different dye concentrations.

JP-A-2004-359946 describes an inkjet ink set that comprises at least a dark ink and a light ink and cures upon exposure to UV rays, wherein the inks constituting the inkjet ink set comprise at least a coloring material, a polymerizable compound, and a photopolymerization initiator, the concentration ratio of the coloring materials for the dark ink and the light ink is 2:1 to 10:1, and the concentration ratio of the photopolymerization initiators is 1:1 to 3:1.

It is an object of the present invention to provide a light ink composition that has excellent curability and stability over time and gives a cured film having good flexibility, and an inkjet recording method, a printed material, and an ink set employing the ink composition.

The above-mentioned objects have been accomplished by the subject-matter of the appended claims, which thus characterizes the present invention.

In accordance with the present invention, there can be provided a light ink composition that has excellent curability and stability over time and gives a cured film having good flexibility, and an inkjet recording method, a printed material, and an ink set employing the ink composition.

### (1) Ink composition

The ink composition (hereinafter, simply called an 'ink') of the present invention is an ink composition comprising (A) a pigment, (B) a polymerizable monomer, (C) a polymerization initiator, and (D) a dispersant, the content of the pigment being no greater than 1 wt % of the entire ink composition, the ratio D/A of the weight A of the pigment and the weight D of the dispersant satisfying the relationship specified in appended claim 1 and the polymerizable monomer being as specified in appended claim 1.

The ink composition of the present invention is an ink composition with a small amount of pigment such that the content of the pigment is no greater than 1 wt % of the entire ink composition, and is also called a 'light ink composition' or a 'light ink'.

The present invention is specified in the appended claims and it is explained in detail below.

The ink composition of the present invention is an ink composition that can cure upon exposure to radiation and is also an oil-based ink composition.

The 'radiation' referred to in the present invention is not particularly limited as long as it is actinic radiation that can provide energy that enables an initiating species to be generated in the ink composition when irradiated, and broadly includes α rays, γ rays, X rays, ultraviolet rays (UV), visible light, and an electron beam; among these, ultraviolet rays and an electron beam are preferable from the viewpoint of curing sensitivity and the availability of equipment, and ultraviolet rays are particularly preferable. The ink composition of the present invention is therefore preferably an ink composition that can cure upon exposure to ultraviolet rays as radiation.

### (A) Pigment

The ink composition of the present invention comprises a pigment.

The pigment referred to here generally means a colorant that is sparingly soluble in various types of solvent (organic solvent, water), and in a normal ink composition it means one for which, of the total solids content of the colorant contained in the ink composition, the amount that dissolves in the ink composition is no greater than 10 wt %.

The ink composition of the present invention has a pigment content of no greater than 1 wt % of the entire ink composition, preferably no greater than 0.7 wt %, more preferably no greater than 0.5 wt %, yet more preferably 0.01 to 0.5 wt %, and particularly preferably 0.2 to 0.5 wt %.

The pigment that can be used in the present invention is not particularly limited, and a known pigment may be used. With regard to the pigment that can be used in the present invention, from the viewpoint of not suppressing sensitivity to a curing reaction by actinic radiation, a compound that does not function as a polymerization inhibitor in a polymerization reaction, which is a curing reaction, is preferably selected.

The pigment that can be used in the present invention is not particularly limited and, for example, organic and inorganic pigments with the Color Index Nos. shown below may be used according to the intended purpose.

Red or magenta pigments: Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Blue or cyan pigments: Pigment Blue 1, 15, 15:1, 15:2, 15:3, 15:4, 15:6, 16, 17-1, 22, 27, 28, 29, 36, and 60.
Green pigments: Pigment Green 7, 26, 36, and 50.
Yellow pigments: Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193.
Black pigments: Pigment Black 7, 28, and 26.
White pigments: Pigment White 6, 18, and 21.

Furthermore, specific examples of the pigment that can preferably be used in the present invention include IRGALITE BLUE GLVO (cyan pigment, manufactured by Ciba Specialty Chemicals), CINQUASIA MAGENTA RT-335 D (magenta pigment, manufactured by Ciba Specialty Chemicals), NOVOPERM YELLOW H2G (yellow pigment, manufactured by Clariant), SPECIAL BLACK 250 (black pigment, manufactured by Ciba Specialty Chemicals), KRONOS 2300 (white pigment, manufactured by KRONOS), and Tipaque CR60-2 (white pigment, manufactured by Ishihara Sangyo Kaisha Ltd.).

It is preferable that the pigment that can be used in the present invention is mixed with a dispersant and dispersed in a polymerizable monomer or is dispersed after mixing the polymerizable monomer and the dispersant. For dispersion of the pigment, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The pigment may be directly mixed with another component when preparing an ink composition or, in order to improve dispersion properties, it may be mixed after being added in advance to a dispersion medium such as a solvent or a polymerizable monomer used in the present invention and uniformly dispersing or dissolving it.

In the present invention, in order to prevent degradation of solvent resistance when there is residual solvent in a cured image and prevent the VOC (Volatile Organic Compound) problem due to residual solvent, the colorant is preferably added to a dispersion medium such as a polymerizable monomer and then mixed. When only taking dispersion suitability into consideration, it is preferable to select a monomer having the lowest viscosity as the polymerizable monomer used for adding the colorant to.

These pigments may be used by appropriately selecting one type or two or more types according to the intended purpose of the ink composition.

When a pigment that is present as a solid in the ink composition is used, it is preferable for the pigment, the dispersant, and the dispersion medium to be selected and for dispersion conditions and filtration conditions to be set so that the average particle size of pigment particles is preferably 0.005 to 0.5 µm, more preferably 0.01 to 0.45 µm, and yet more preferably 0.015 to 0.4 µm. By such control of particle size, clogging of a head nozzle can be suppressed, and the storage stability, the transparency, and the curing sensitivity of the ink composition can be maintained.

In the present invention, with regard to the ratio by weight of the dispersant relative to the pigment, when the weight of the pigment in the ink composition is A and the weight of the dispersant in the ink composition is D, the ratio by weight (D/A) is 1.2 ≤ D/A ≤ 10, and more preferably 1.2 ≤ D/A ≤ 8. When the ratio by weight of the dispersant relative to the pigment exceeds 0.5, after being stored over time there is no aggregation/precipitation of the pigment, the ink viscosity does not increase, and an ink composition having excellent storage stability over time can thus be obtained. Furthermore, when the ratio is 15 or less, an ink composition having a low ink viscosity and excellent discharge properties can be obtained.

### (B) Polymerizable monomer

The ink composition that can be used in the present invention comprises at least a polymerizable monomer.

The polymerizable monomer that can be used in the present invention is a radically polymerizable compound as specified in appended claim 1.

Moreover, with regard to the polymerizable compound that is used in the present invention in accordance with appended claim1, one type may be used on its own, two or more types may be used or, for example, a radically polymerizable compound and a cationically polymerizable compound may be used in combination.

In some embodiments, the ink composition of the present invention comprises a radically polymerizable monomer being an N-vinyllactam and/or having an aromatic group. Due to it containing the monomer, an ink composition having a pigment dispersion with excellent stability over time can be obtained. Although the reason for the effect being exhibited is not clear, it is surmised that the affinity between the pigment surface and a highly polar group such as an amide group or an aromatic group analogous to the pigment structure is high, thus decreasing the pigment surface energy and thereby giving a stable pigment dispersion. The monomer is particularly suitably used for a light ink for which it is difficult to maintain pigment dispersion stability.

### Radically polymerizable monomer having amide bond

As a radically polymerizable compound that can be used in the present invention, it is one embodiment to use an *N*-vinyllactam.

Preferred examples of the *N*-vinyllactam that can be used in the present invention include compounds represented by Formula (I) below.

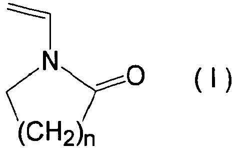

In Formula (I), n denotes an integer of 1 to 5; n is preferably an integer of 2 to 4 from the viewpoint of flexibility after the ink composition is cured, adhesion to a recording medium, and ready availability of starting materials, n is more preferably 2 or 4, and n is particularly preferably 4, which is *N*-vinylcaprolactam. *N*-Vinylcaprolactam is preferable since it has excellent safety, is commonly used and is readily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded to the lactam ring.

Since the *N*-vinyllactam is a compound having a relatively high melting point, when the *N*-vinyllactam is used, if the content thereof in the ink composition is no greater than 40 wt %, good solubility is exhibited at a low temperature of 0°C or below, and the temperature range in which the ink composition can be handled becomes large.

### Radically polymerizable monomer having aromatic group

As a radically polymerizable compound that is used in one embodiment of the present invention, use is made of a polymerizable monomer having an aromatic group.

Preferred examples of the aromatic group include a phenyl group, a naphthyl group, an anthracenyl group, and a pyridinyl group.

Specific preferred examples of the radically polymerizable monomer having an aromatic group include the compounds below (R-P-1 to 9, and N-1 to 28). In some of the chemical structures described below, a hydrocarbon chain is represented by a simplified structural formula in which symbols for carbon (C) and hydrogen (H) are omitted.

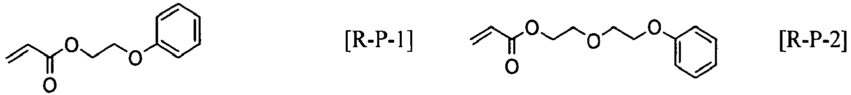

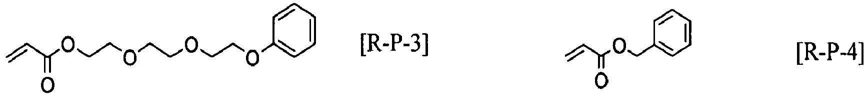

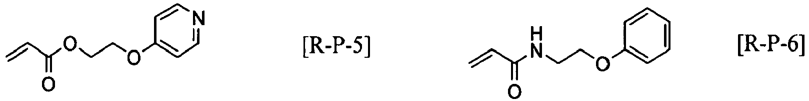

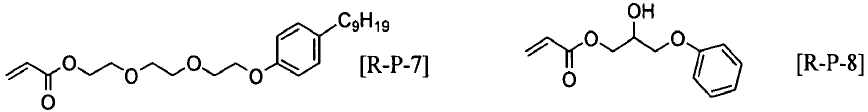

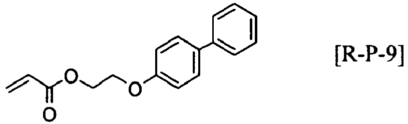

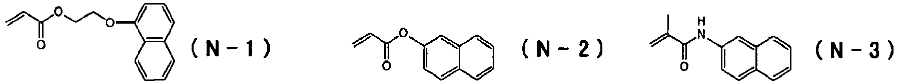

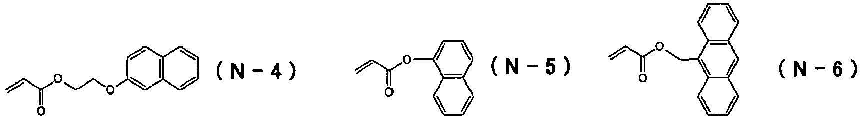

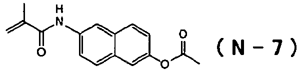

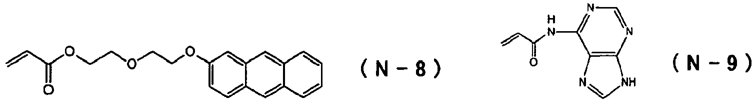

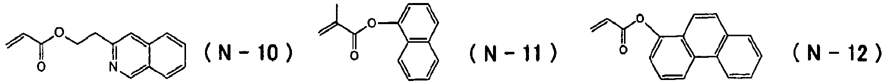

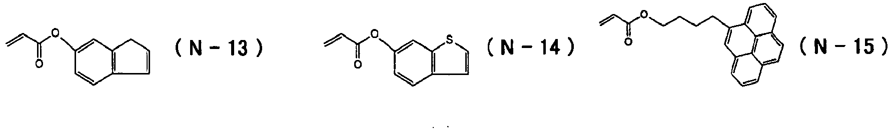

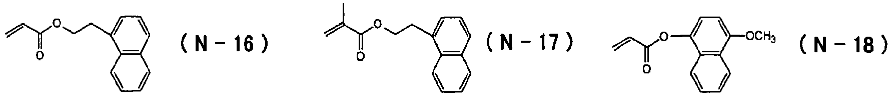

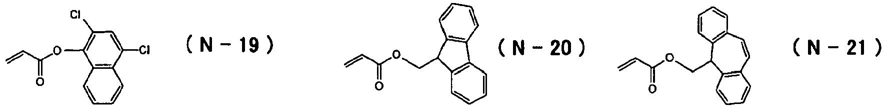

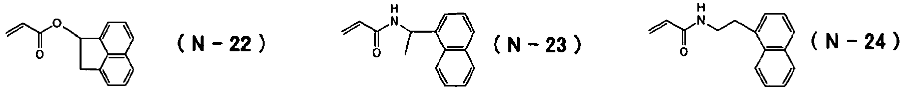

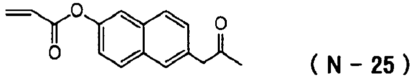

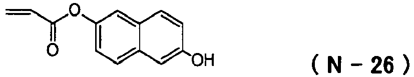

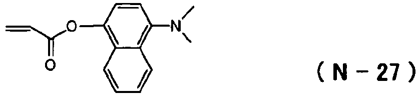

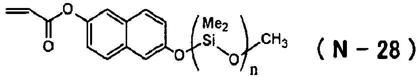

Furthermore, in another embodiment, as the radically polymerizable compound, a monomer is used, which has a cyclic structure other than an aromatic group. By containing a monomer having a cyclic structure other than an aromatic group, an ink composition having excellent curability can be obtained.

Examples of the cyclic monomer include a monomer having a cyclic hydrocarbon group such as a cyclohexyl group, a cyclopentyl group, a cycloheptyl group, an isobornyl group, or a tricyclodecanyl group, and a monomer having a heterocyclic group such as a tetrahydrofurfuryl group or a piperidinyl group.

Preferred examples of a cyclic monomer having an acryloxy group, a methacryloxy group, and/or an acrylamide group include norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, trimethylcyclohexyl (meth)acrylate, 4-*t*-butylcyclohexyl (meth)acrylate, acryloylmorpholine, 2-benzyl (meth)acrylate, phenoxyethyl (meth)acrylate, phenoxydiethylene glycol (meth)acrylate, phenoxytriethylene glycol (meth)acrylate, ethylene oxide (EO)-modified cresol (meth)acrylate, tetrahydrofurfuryl (meth)acrylate, caprolactone-modified tetrahydrofurfuryl (meth)acrylate, nonylphenoxy polyethylene glycol (meth)acrylate, neopentyl glycol benzoate (meth)acrylate, paracumylphenoxy ethylene glycol (meth)acrylate, *N*-phthalimidoethyl (meth)acrylate, pentamethylpiperidyl (meth)acrylate, tetramethylpiperidyl (meth)acrylate, *N*-cyclohexylacrylamide, *N*-(1,1-dimethyl-2-phenyl)ethyl(meth)acrylamide, *N*-diphenylmethylacrylamide, *N*-phthalimidomethyl(meth)acrylamide, *N*-(1,1'-dimethyl-3-(1,2,4-triazol-1-yl))propyl(meth)acrylamide, and 5-(meth)acryloyloxymethyl-5-ethyl-1,3-dioxacyclohexane.

Furthermore, preferred examples of a cyclic monomer having an acryloxy group, a methacryloxy group, an acrylamide group, a methacrylamide group, and/or a vinyloxy group include compounds (M-1) to (M-29) below.

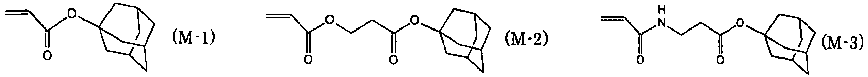

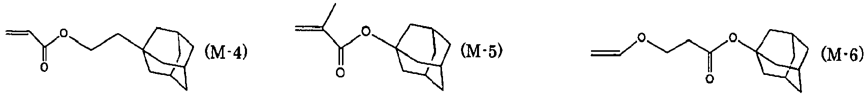

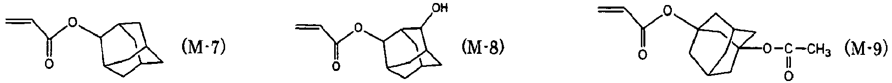

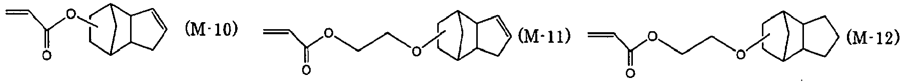

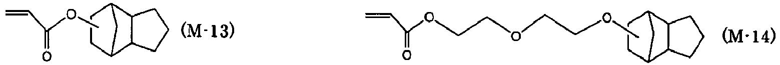

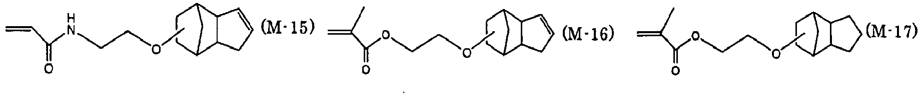

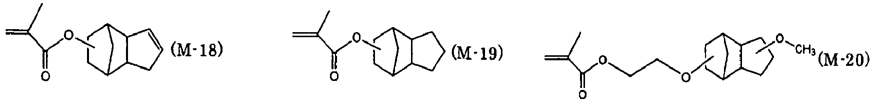

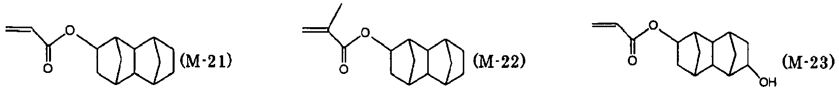

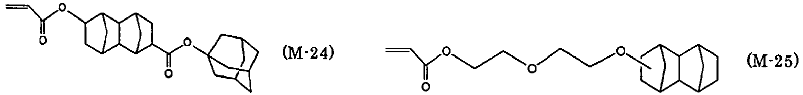

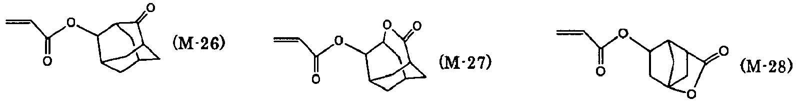

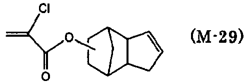

As the radically polymerizable monomer, an acyclic monofunctional monomer described below may be used in combination as necessary. The acyclic monofunctional monomer has relatively low viscosity and may be used preferably for the purpose of decreasing the viscosity of the composition. However, from the viewpoint of suppressing stickiness of a cured film and giving a high film strength so as not to cause scratches, etc. during molding, the proportion of the acyclic monofunctional monomer below in the entire composition is preferably no greater than 20 wt %, more preferably no greater than 15 wt %, and particularly preferably no greater than 10 wt %.

Specific examples thereof include octyl (meth)acrylate, 2-ethylhexyl (meth)acrylate, decyl (meth)acrylate, dodecyl (meth)acrylate, tridecyl (meth)acrylate, tetradecyl (meth)acrylate, hexadecyl (meth)acrylate, 2-hydroxyethyl (meth)acrylate, butoxyethyl (meth)acrylate, carbitol (meth)acrylate, 2-ethylhexyl diglycol (meth)acrylate, polyethylene glycol (meth)acrylate monomethyl ether, polypropylene glycol (meth)acrylate monomethyl ether, and polytetraethylene glycol (meth)acrylate monomethyl ether.

As the radically polymerizable monomer, a polyfunctional monomer described below may be used in combination as necessary. By containing a polyfunctional monomer, a composition having excellent curability and a high cured film strength is obtained. From the viewpoint of cured film stretchability suitable for molding being maintained, the proportion of the polyfunctional monomer in the entire composition is preferably no greater than 15 wt %, more preferably no greater than 10 wt %, and particularly preferably no greater than 5 wt %.

Specific examples thereof include bis(4-(meth)acryloxypolyethoxyphenyl)propane, neopentyl glycol di(meth)acrylate, 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, the di(meth)acrylate of a bisphenol A propylene oxide (PO) adduct, the di(meth)acrylate of a bisphenol A EO adduct, dipentaerythritol hexa(meth)acrylate, and caprolactone modified dipentaerythritol hexa(meth)acrylate.

### Cationically polymerizable compound

The cationically polymerizable compound that can optionally be used in the present invention in addition to the radically polymerizable monomer specified in appended claim 1 is not particularly limited as long as it is a compound for which a polymerization reaction is initiated by a cationic polymerization initiating species generated from a cationic polymerization initiator, which is described later, and that cures, and various types of cationically polymerizable monomers known as cationically photopolymerizable monomers may be used. Preferred examples of the cationically polymerizable monomers include epoxy compounds, vinyl ether compounds, and oxetane compounds described in JP-A-6-9714, JP-A-2001-31892, JP-A-2001-40068, JP-A-2001-55507, JP-A-2001-310938, JP-A-2001-310937, and JP-A-2001-220526. Furthermore, as the cationically polymerizable compound, for example, a cationic polymerization type photocuring resin is known, and in recent years cationic photopolymerization type photocuring resins that have been sensitized in a visible light wavelength region of 400 nm or greater have also been disclosed in, for example, JP-A-6-43633 and JP-A-8-324137.

### Cationically polymerizable monomer having amide bond

As a cationically polymerizable compound that can optionally be used in the present invention, in addition to the radically polymerizable monomer specified in appended claim 1 it is preferable to use a polymerizable monomer having an amide bond.

Examples of the cationically polymerizable monomer having an amide bond include compounds (C-A-1) to (C-A-5) below.

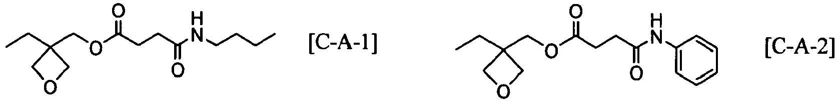

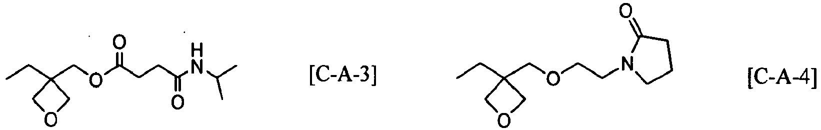

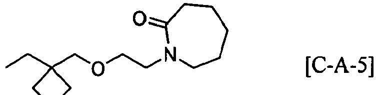

### Cationically polymerizable monomer having aromatic group

As a cationically polymerizable compound that can optionally be used in the present invention, in addition to the radically polymerizable monomer specified in appended claim 1 it is preferable to use a polymerizable monomer having an aromatic group.

Examples of the aromatic group include a phenyl group, a naphthyl group, an anthracenyl group, and a pyridinyl group.

Examples of the cationically polymerizable monomer having an aromatic group include compounds (C-P-1) to (C-P-6) below.

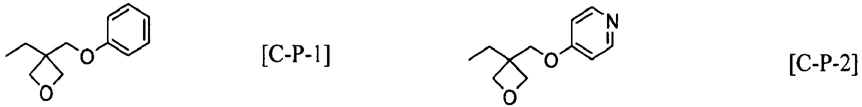

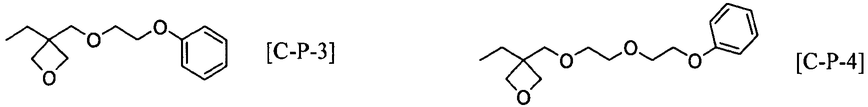

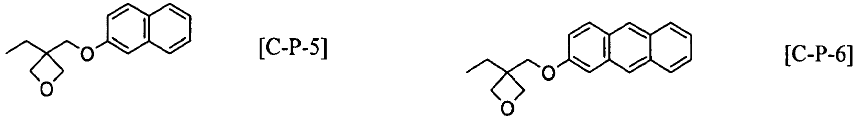

The polymerizable monomer in the ink composition that can be used in the present invention is preferably 60 to 95 wt % relative to the total amount of the ink composition, more preferably 65 to 90 wt %, and yet more preferably 70 to 90 wt %. It is preferable for it to be in the above-mentioned range since the curability is excellent and the viscosity is appropriate.

Among the polymerizable monomers in the ink composition that can be used in the present invention, it is preferable for at least one thereof to be a monofunctional monomer; when radically polymerizable monofunctional monomers are used at least one thereof is preferably a monofunctional (meth)acrylate, and it is more preferable for at least one thereof to be a monofunctional acrylate. It is preferable to use a monofunctional monomer since sufficient curability as well as sufficient flexibility of a cured film can be obtained.

When a monofunctional radically polymerizable monomer is used as the polymerizable monomer, the proportion of the monofunctional radically polymerizable monomer in the composition is preferably 50 to 90 wt %, more preferably 55 to 85 wt %, and yet more preferably 65 to 80 wt %. It is preferable for the proportion to be in the above-mentioned range since the curability and the flexibility are excellent and the viscosity is appropriate.

When a di- or higher-functional monomer (polyfunctional monomer) is present as the polymerizable monomer, the proportion of the di- or higher-functional monomer is preferably 0.5 to 50 wt %, more preferably 0.5 to 30 wt %, and yet more preferably 0.5 to 20 wt %. It is preferable for the proportion to be in the above-mentioned range since the curability and the flexibility are excellent and the viscosity is appropriate.

Furthermore, the ink composition of the present invention preferably comprises a radically polymerizable monomer having an amide bond, a radically polymerizable monomer having an aromatic group, and a radically polymerizable monomer having a cyclic structure other than an aromatic group.

### (C) Polymerization initiator

In the present invention, the ink comprises a polymerization initiator. As a polymerization initiator that can be used in the present invention, a known polymerization initiator may be used, and it is preferable to use a radical polymerization initiator. The polymerization initiator that can be used in the present invention may be used singly or in a combination of two or more types. Furthermore, the radical polymerization initiator may be used in combination with a cationic polymerization initiator.

The polymerization initiator that can be used in the ink composition of the present invention is a compound that forms a polymerization initiating species by absorbing external energy. The external energy used for initiating polymerization can be broadly divided into heat and actinic radiation, and a thermal polymerization initiator and a photopolymerization initiator are used respectively. Examples of the actinic radiation include γ rays, β rays, an electron beam, ultraviolet rays, visible light, and infrared rays. In the present invention, the external energy used for initiating polymerization is preferably actinic radiation, more preferably the electron beam or ultraviolet rays, and yet more preferably ultraviolet rays.

### Radical polymerization initiator

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (I) a compound having a carbon-halogen bond, and (m) an alkylamine compound. With regard to these radical polymerization initiators, the above-mentioned compounds (a) to (m) may be used singly or in combination. The radical polymerization initiator in the present invention may suitably be used singly or in a combination of two or more types.

Preferred examples of the aromatic ketone (a) and the thio compound (e) include a compound having a benzophenone skeleton (benzophenone compound) or a compound having a thioxanthone skeleton (thioxanthone compound) described in 'RADIATION CURING IN POLYMER SCIENCE AND TECHNOLOGY' J. P. FOUASSIER and J. F. RABEK (1993), pp. 77 to 117. Preferred examples of the aromatic ketone (a), the acylphosphine compound (b), and the thio compound (e) include an α-thiobenzophenone compound described in JP-B-47-6416, a benzoin ether compound described in JP-B-47-3981, an α-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, α-aminobenzophenones described in JP-B-1-34242, US Pat. No. 4,318,791, and EP No. 0284561A1, p-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

Examples of the benzophenone compound include benzophenone, 4-phenylbenzophenone, isophthalophenone, and 4-benzoyl-4'-methylphenylsulfide. As the benzophenone compound, it is also preferable to use a diaminobenzophenone compound. Examples of the diaminobenzophenone compound include p,p'-tetramethyldiaminobenzophenone.

Examples of the thioxanthone compound include 2,4-diethylthioxanthone, 2-isopropylthioxanthone, and 2-chlorothioxanthone.

In the present invention, the aromatic ketone (a) is preferably an α-hydroxyketone, and examples thereof include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone.

Among them, the aromatic ketone (a) is particularly preferably a 1-hydroxycyclohexyl phenyl ketone compound. The 1-hydroxycyclohexyl phenyl ketone compound referred to in the present invention means 1-hydroxycyclohexyl phenyl ketone and a compound obtained by substituting 1-hydroxycyclohexyl phenyl ketone with any substituent. The substituent may be selected freely from a range that enables an ability as a radical polymerization initiator to be exhibited, and specific examples thereof include an alkyl group (e.g. a methyl group, an ethyl group, a propyl group, a butyl group, etc.).

In the present invention, the acylphosphine compound (b) is preferably an acylphosphine oxide compound.

Examples of the acylphosphine oxide compound include a compound having a structure represented by Formula (7) or (8).

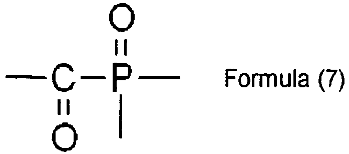

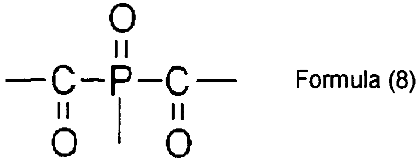

The acylphosphine oxide compound is particularly preferably one having a chemical structure represented by Formula (9) or (10). 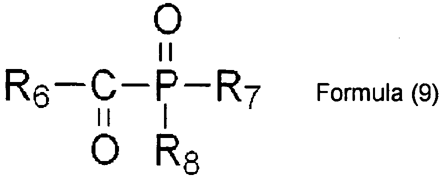 (In the formula, R₆, R₇, and R₈ denote an aromatic hydrocarbon group, which may have a methyl group or an ethyl group as a substituent.) 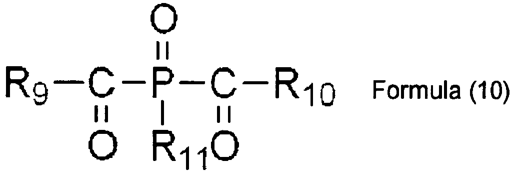 (In the formula, R₉, R₁₀, and R₁₁ denote an aromatic hydrocarbon group, which may have a methyl group or an ethyl group as a substituent.)

As the acylphosphine oxide compound, a monoacylphosphine oxide compound, a bisacylphosphine oxide compound, etc. may be used, and as the monoacylphosphine oxide compound, a known monoacylphosphine oxide compound may be used. Examples thereof include monoacylphosphine oxide compounds described in JP-B-60-8047 and JP-B-63-40799. Specific examples thereof include methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl p-tolylphenylphosphinate, methyl o-tolylphenylphosphinate, methyl 2,4-dimethylbenzoylphenylphosphinate, isopropyl p-t-butylbenzoylphenylphosphinate, methyl acryloylphenylphosphinate, isobutyryldiphenylphosphine oxide, 2-ethylhexanoyldiphenylphosphine oxide, o-tolyldiphenylphosphine oxide, p-t-butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoyl-bis-diphenylphosphine oxide, pivaloyldiphenylphosphine oxide, p-tolyldiphenylphosphine oxide, 4-(t-butyl)benzoyldiphenylphosphine oxide, terephthaloyl-bis-diphenylphosphine oxide, 2-methylbenzoyldiphenylphosphine oxide, versatoyldiphenylphosphine oxide, 2-methyl-2-ethylhexanoyldiphenylphosphine oxide, 1-methylcyclohexanoyldiphenylphosphine oxide, methyl pivaloylphenylphosphinate, and isopropyl pivaloylphenylphosphinate.

As the bisacylphosphine oxide compound, a known bisacylphosphine oxide compound may be used. Examples thereof include bisacylphosphine oxide compounds described in JP-A-3-101686, JP-A-5-345790, and JP-A-6-298818. Specific examples thereof include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among them, preferred examples of the acylphosphine oxide compound in the present invention include bis(2,4,6-trimethylbenzoyl)phenylphosphine oxide (Irgacure 819: manufactured by Ciba Specialty Chemicals), bis(2,6-dimethoxybenzoyl)-2,4,4-trimethylpentylphenylphosphine oxide, and 2,4,6-trimethylbenzoyldiphenylphosphine oxide (Darocur TPO: manufactured by Ciba Specialty Chemicals, Lucirin TPO: manufactured by BASF).

As the aromatic onium salt compound (c), there can be cited aromatic onium salts of elements of Groups 15, 16, and 17 of the periodic table, specifically, N, P, As, Sb, Bi, O, S, Se, Te, and I. Examples thereof include iodonium salts described in EP No. 104143, US Pat. No. 4837124, JP-A-2-150848, and JP-A-2-96514, diazonium salts (optionally substituted benzenediazoniums, etc.) described in EP Nos. 370693, 233567, 297443, 297442, 279210, and 422570, US Pat. Nos. 3902144, 4933377, 4760013, 4734444, and 2833827, diazonium salt resins (diazodiphenylamine formaldehyde resins, etc.), N-alkoxypyridinium salts, etc. (e.g. those described in US Pat. No. 4,743,528, JP-A-63-138345, JP-A-63-142345, JP-A-63-142346, and JP-B-46-42363; specific examples thereof include 1-methoxy-4-phenylpyridinium tetrafluoroborate); furthermore, compounds described in JP-B-52-147277, 52-14278, and 52-14279 may suitably be used. A radical or an acid is formed as an active species.

As the organic peroxide (d), almost all organic compounds having at least one oxygen-oxygen bond per molecule can be cited, and preferred examples thereof include peroxide ester compounds such as 3,3',4,4'-tetra(t-butylperoxy-carbonyl)benzophenone, 3,3',4,4'-tetra(t-amylperoxycarbonyl)benzophenone, 3,3',4,4'-tetra(t-hexylperoxycarbonyl)benzophenone, 3,3',4,4'-tetra(t-octylperoxycarbonyl)benzophenone, 3,3',4,4'-tetra(cumylperoxycarbonyl)benzophenone, 3,3',4,4'-tetra(p-isopropylcumylperoxycarbonyl)benzophenone, and di-t-butyldiperoxyisophthalate.

As the hexaarylbiimidazole compound (f), there can be cited lophine dimers described in JP-B-45-37377 and JP-B-44-86516, and examples thereof include 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o,o'-dichlorophenyl)-4,4',5,5'-tetraphenylbiimidazole, 2,2'-bis(o-nitrophenyl)-4 ,4',5,5'-tetraphenylbiimidazole, 2,2'-bis(o-methylphenyl)-4,4',5,5'-tetraphenylbiimidazole, and 2,2'-bis(o-trifluorophenyl)-4,4',5,5'-tetraphenylbiimidazole.

As the ketoxime ester compound (g), there can be cited 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-p-toluenesulfonyloxyiminobutan-2-one, and 2-ethoxycarbonyloxyimino-1-phenylpropan-1-one.

Examples of the borate compound (h) include compounds described in US Pat. Nos. 3,567,453 and 4,343,891, and EP Nos. 109,772 and 109,773.

Examples of the azinium salt compound (i) include N-O bond-containing compounds described in JP-A-63-138345, JP-A-63-142345, JP-A-63-142346, JP-A-63-143537, and JP-B-46-42363.

Examples of the metallocene compound (j) include titanocene compounds described in JP-A-59-152396, JP-A-61-151197, JP-A-63-41484, JP-A-2-249, and JP-A-2-4705, and iron-arene complexes described in JP-A-1-304453 and JP-A-1-152109.

Specific examples of the titanocene compound include dichlorobis(cyclopentadienyl)titanium, bis(cyclopentadienyl)bis(phenyl)titanium, bis(cyclopentadienyl)bis(2,3,4,5,6-pentafluorophen-1-yl)titanium, bis(cyclopentadienyl)bis(2,3,5,6-tetrafluorophen-1-yl)titanium, bis(cyclopentadienyl)bis(2,4,6-trifluorophen-1-yl)titanium, bis(cyclopentadienyl)bis(2,6-difluorophen-1-yl)titanium, bis(cyclopentadienyl)bis(2,4-difluorophen-1-yl)titanium, bis(methylcyclopentadienyl)bis(2,3,4,5,6-pentafluorophen-1-yl)titanium, bis(methylcyclopentadienyl)bis(2,3,5,6-tetrafluorophen-1-yl)titanium, bis(methylcyclopentadienyl)bis(2,4-difluorophen-1-yl)titanium, bis(cyclopentadienyl)bis[2,6-difluoro-3-(pyrr-1-yl)phenyl]titanium, bis(cyclopentadienyl)bis[2,6-difluoro-3-(methylsulfonamido)phenyl]titanium, and bis(cyclopentadienyl)bis[2,6-difluoro-3-(N-butylbiaroylamino)phenyl]titanium.

Examples of the active ester compound (k) include nitrobenzyl ester compounds described in EP Nos. 0290750, 046083, 156153, 271851, and 0388343, US Pat. Nos. 3901710 and 4181531, JP-A-60-198538, and JP-A-53-133022, iminosulfonate compounds described in EP Nos. 0199672, 84515,199672, 044115, and 0101122, US Pat. Nos. 4618564, 4371605, and 4431774, JP-A-64-18143, JP-A-2-245756, and JP-A-4-365048, and compounds described in JP-B-62-6223, JP-B-63-14340, and JP-A-59-174831.

Preferred examples of the compound (I) having a carbon-halogen bond include a compound described in Wakabayashi et. al, Bull. Chem. Soc. Japan, 42, 2924 (1969), a compound described in British Patent No. 1388492, a compound described in JP-A-53-133428, and a compound described in German Patent No. 3337024.

Examples of the alkylamine compound (m) include an alkylenediamine (ethylenediamine, tetramethylenediamine, hexamethylenediamine, etc.), a polyalkylene (alkylene having 2 to 6 carbons) polyamine (diethylenetriamine, triethylenetetramine, pentaethylenehexamine, iminobispropylamine, bis(hexamethylene)triamine, etc.), an alkyl- or hydroxyalkyl-amine compound (an alkyl (having 1 to 3 carbons) aminopropylamine, aminoethylethanolamine, methyliminobispropylamine, etc.), N-aminoethylpiperazine, 1,3-diaminocyclohexane, isophoronediamine, hydrogenated methylenedianiline, 3,9-bis(3-aminopropyl)-2,4,8,10-tetraoxaspiro[5.5]undecane, N,N-dimethylcyclohexylamine, triethylamine, N-methylmorpholine, N-ethylmorpholine, and triethylenediamine.

Examples further include a compound described in F. C. Schaefer et al., J. Org. Chem., 29, 1527 (1964), a compound described in JP-A-62-58241, a compound described in JP-A-5-281728, a compound described in German Pat. No. 2641100, a compound described in German Pat. No. 3333450, compounds described in German Pat. No. 3021590, and compounds described in German Pat. No. 3021599.

### Cationic polymerization initiator

When a cationically polymerizable compound is optionally used in the present invention, in addition to the radically polymerizable monomer specified in appended claim 1 it is preferable to use a cationic polymerization initiator. Examples of the cationic polymerization initiator (photo-acid generator) include chemically amplified photoresists and compounds used in cationic photopolymerization ('Imejingu you Yukizairyou' (Organic Materials for Imaging), Ed. The Japanese Research Association for Organic Electronics Materials, Bunshin Publishing Co. (1993), pp. 187-192). Preferred examples of the cationic polymerization initiator in the present invention are listed below.

Firstly, B(C₆F₅)₄⁻, PF₆⁻, AsF₆⁻, SbF₆⁻, and CF₃SO₃⁻ salts of diazonium, ammonium, iodonium, sulfonium, phosphonium, etc. aromatic onium compounds can be cited. Secondly, sulfonated materials that generate a sulfonic acid can be cited. Thirdly, halides that photogenerate a hydrogen halide can also be used. Fourthly, iron arene complexes can be cited.

Examples [(b-1) to (b-96)] of cationic polymerization initiators are listed below, but the present invention should not be construed as being limited thereby.

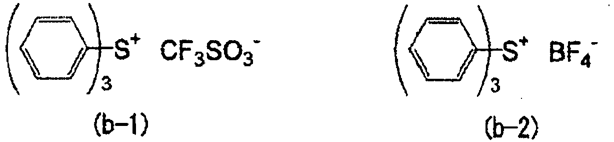

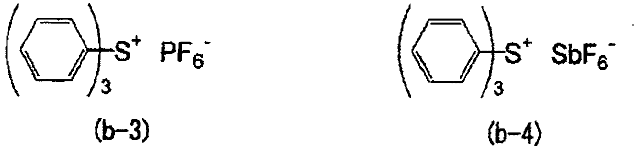

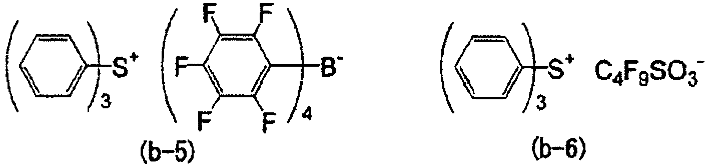

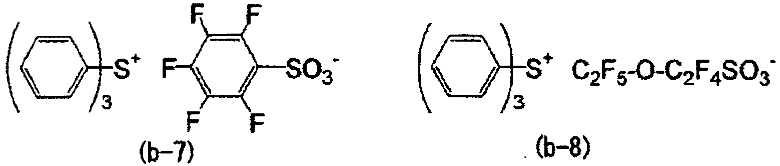

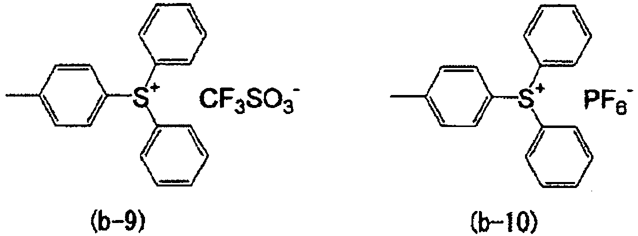

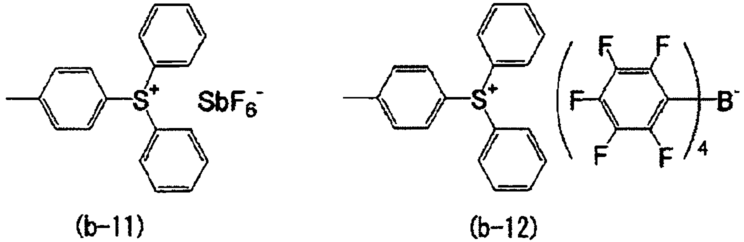

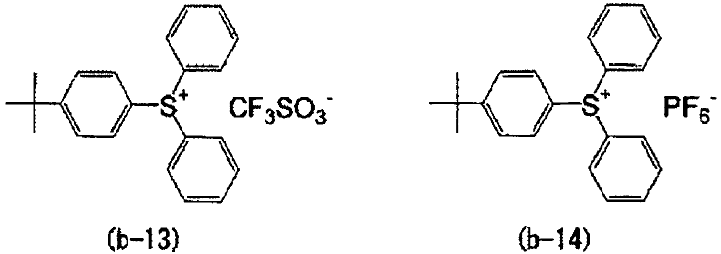

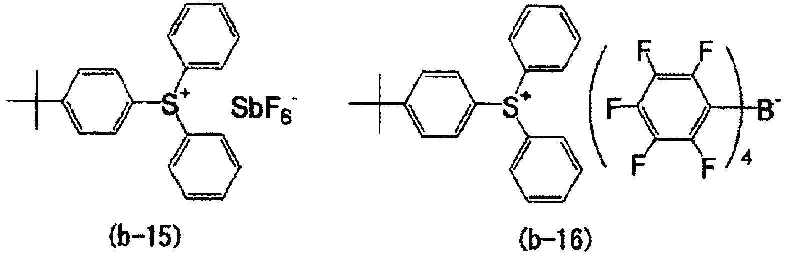

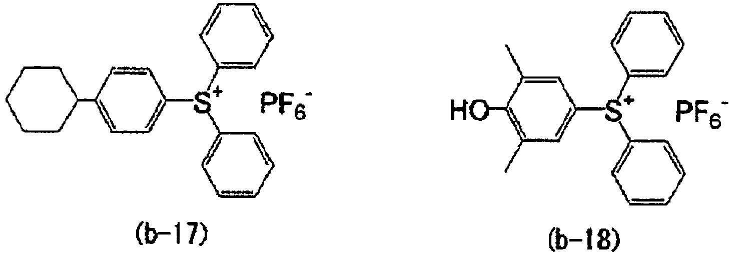

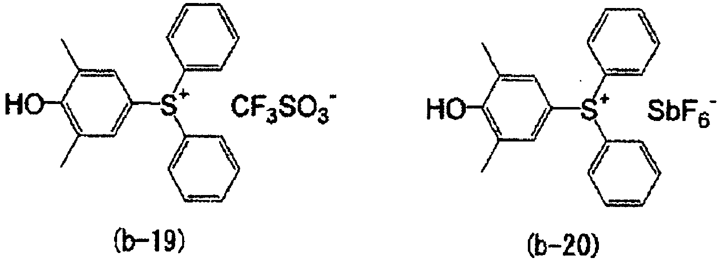

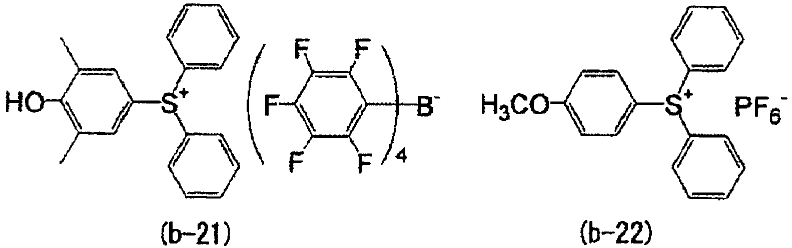

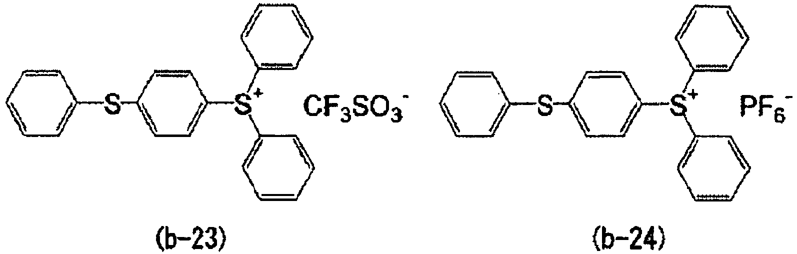

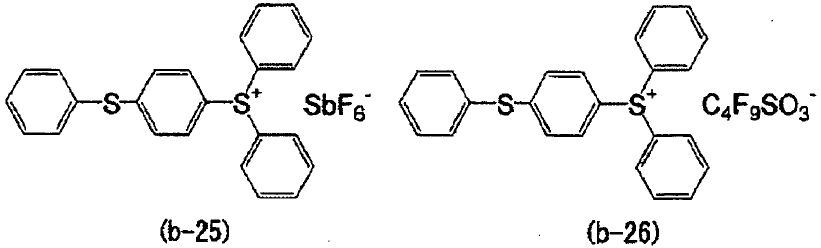

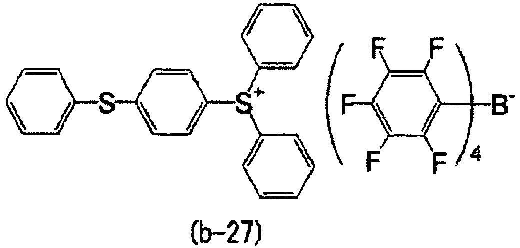

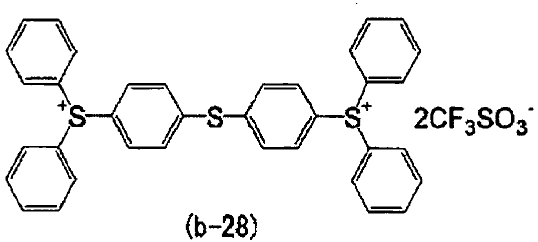

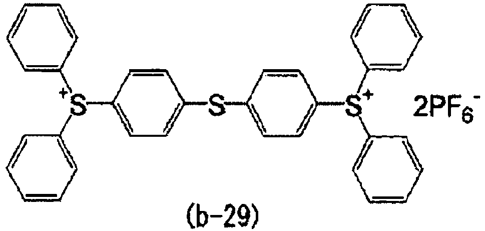

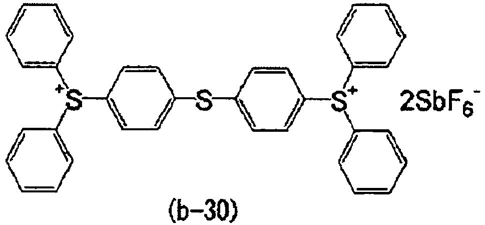

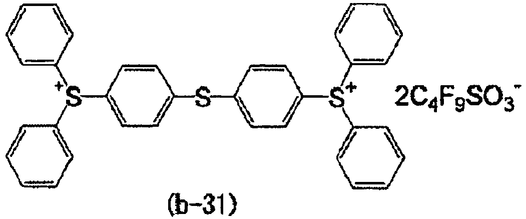

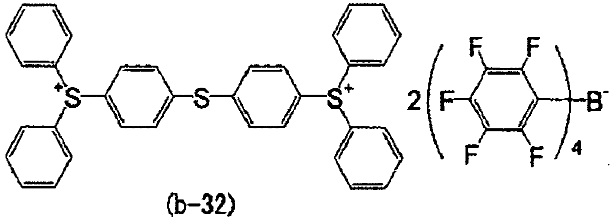

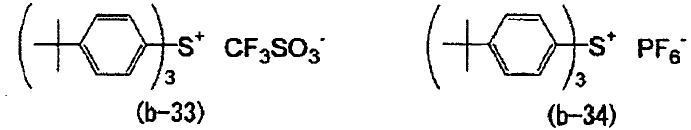

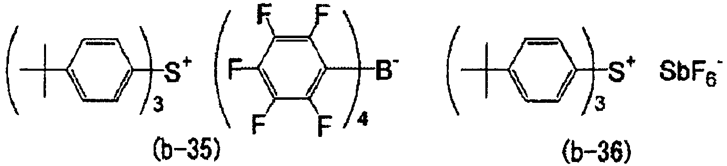

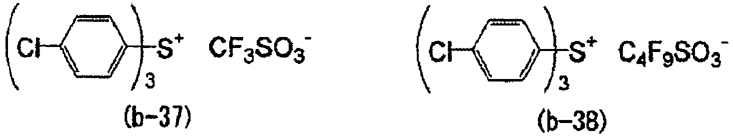

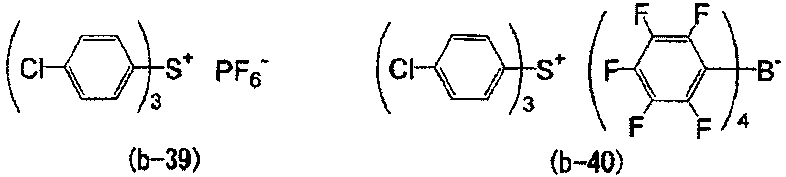

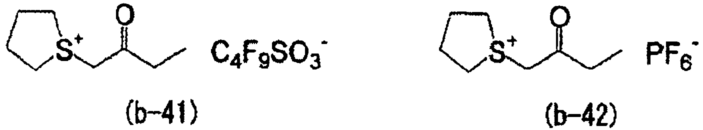

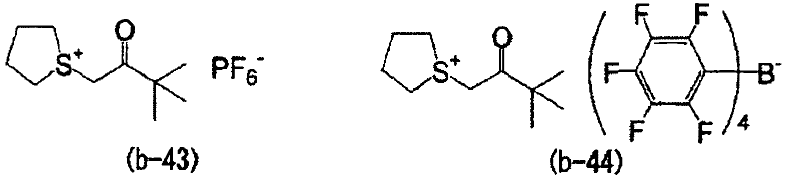

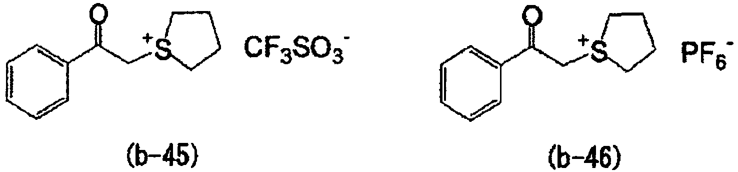

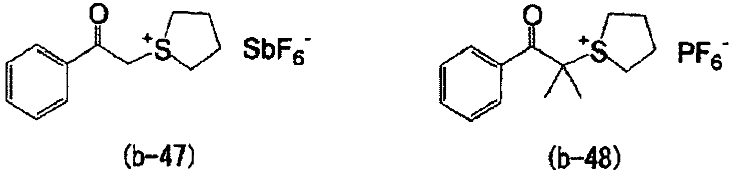

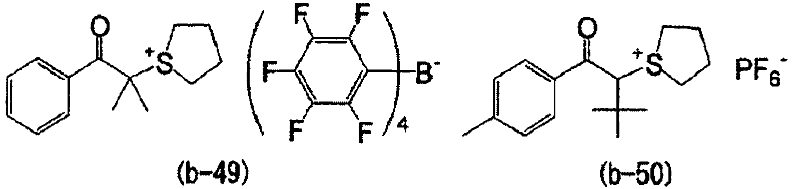

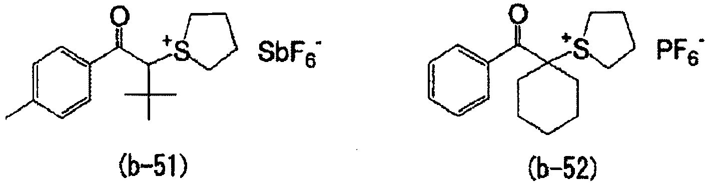

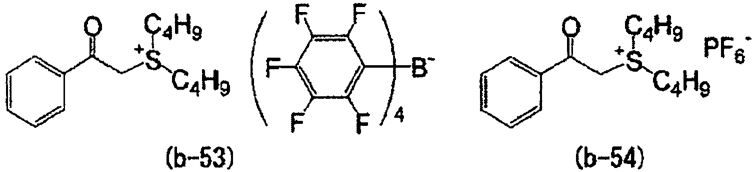

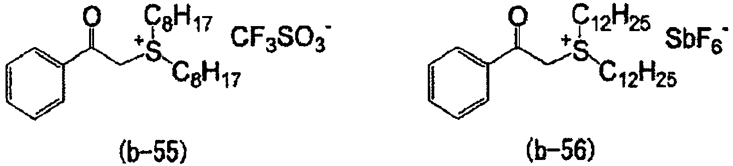

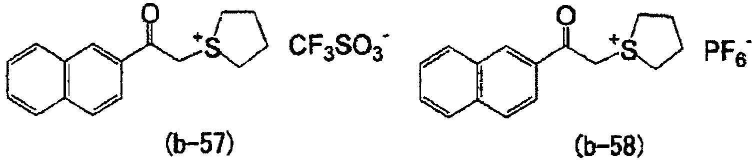

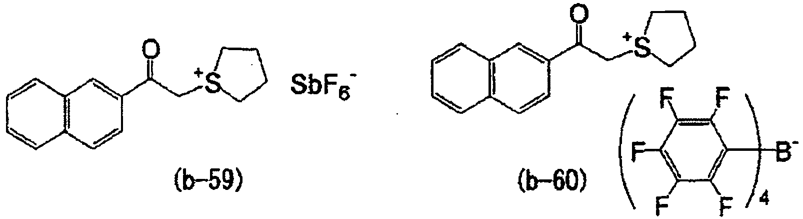

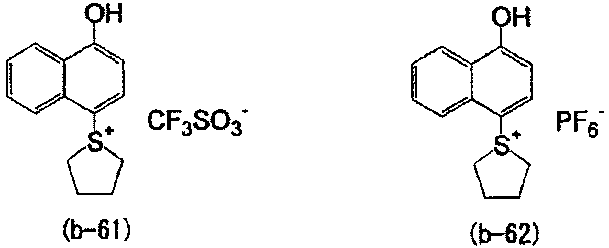

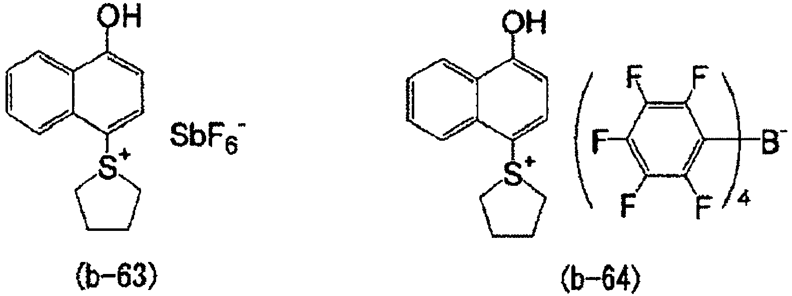

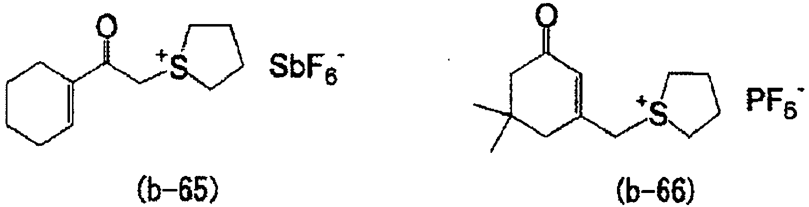

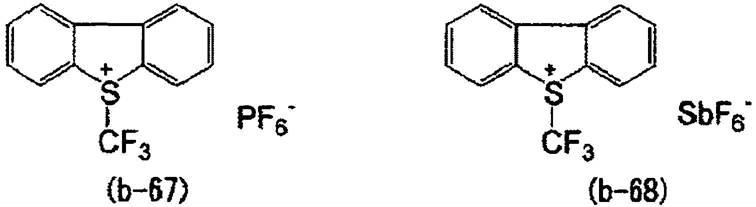

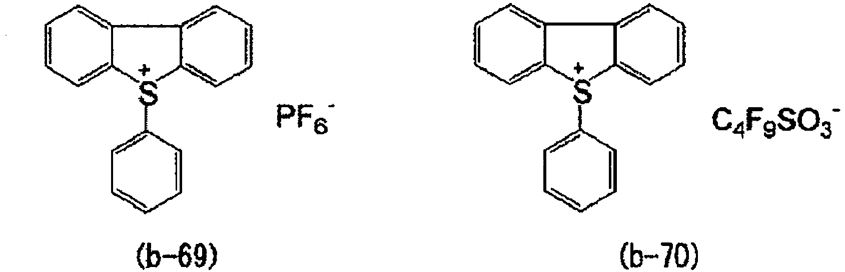

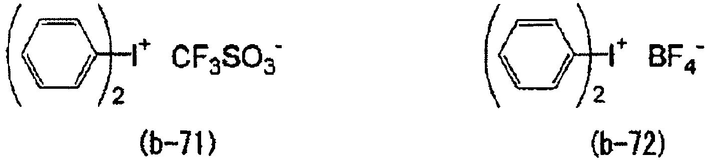

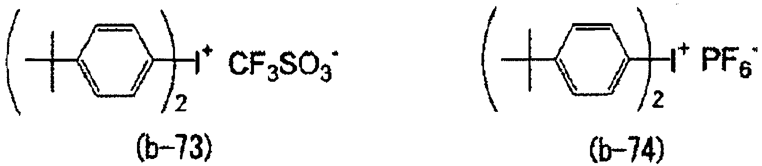

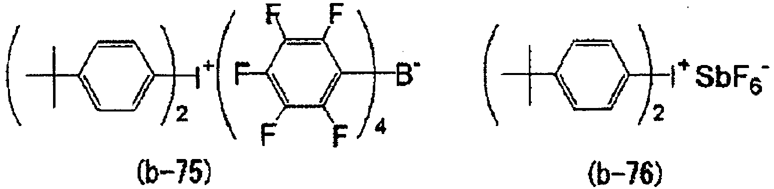

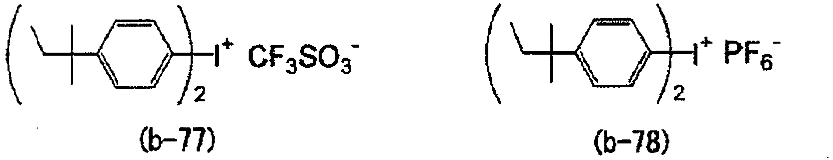

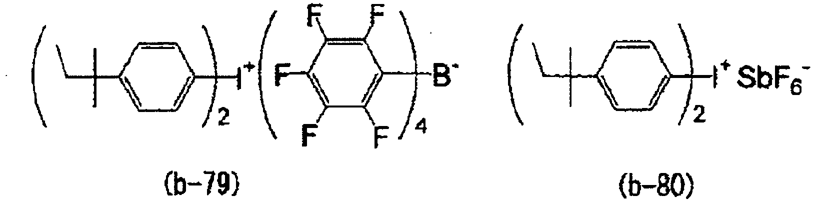

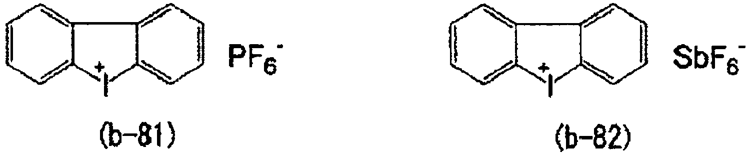

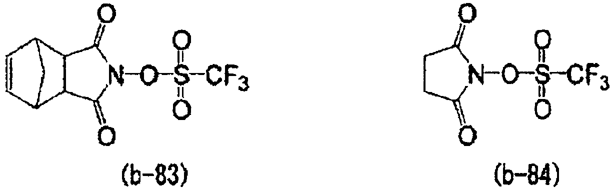

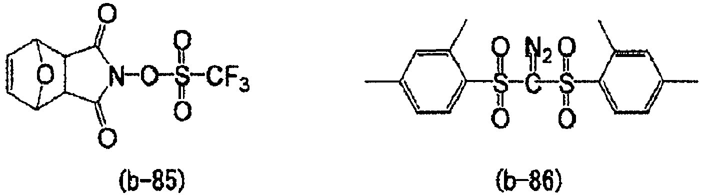

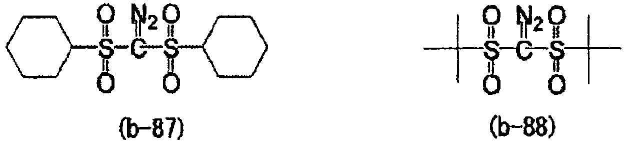

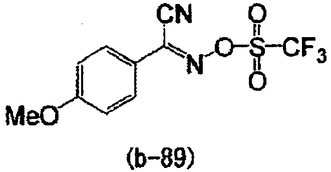

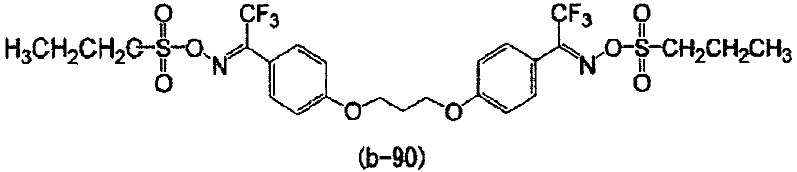

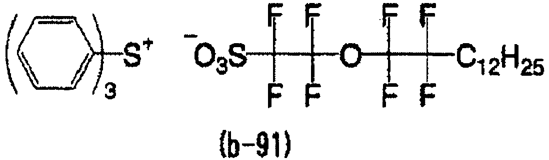

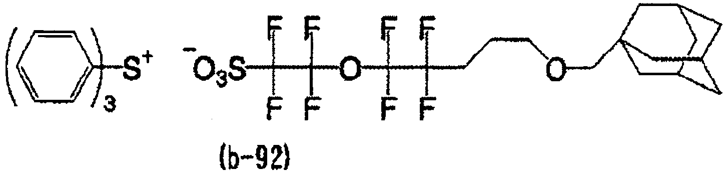

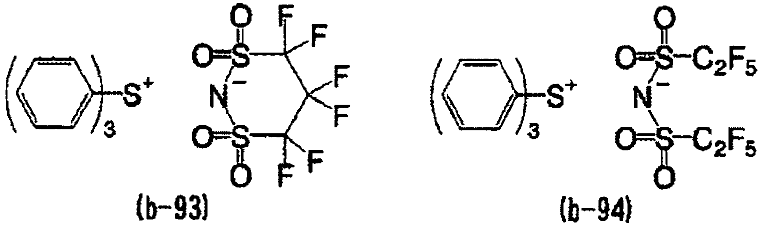

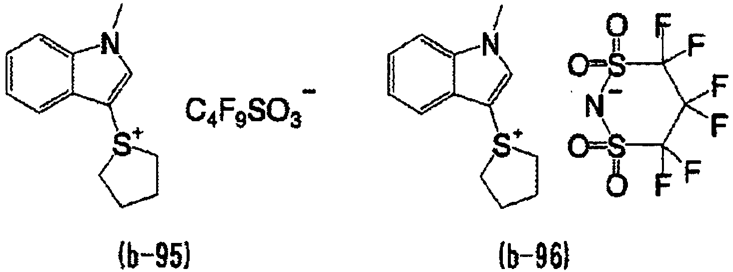

In the ink composition of the present invention, the total amount of polymerization initiator used is preferably 0.01 to 35 wt % relative to the total amount of polymerizable compound used, more preferably 0.5 to 20 wt %, and yet more preferably 1.0 to 15 wt %. The ink composition can be cured sufficiently with 0.01 wt % or greater of the polymerization initiator, and a cured film having a uniform degree of curing can be obtained with 35 wt % or less.

Furthermore, when a sensitizer, which will be described later, is used in the ink composition of the present invention, the total amount of polymerization initiator used is preferably 200:1 to 1:200 relative to the sensitizer as a ratio by weight of polymerization initiator: sensitizer, more preferably 50:1 to 1:50, and yet more preferably 20:1 to 1:5.

### (D) Dispersant

The ink composition of the present invention comprises a dispersant in order to stably disperse the pigment in the ink composition.

As the dispersant that can be used in the present invention, a polymeric dispersant is preferable. The 'polymeric dispersant' referred to in the present invention means a dispersant having a weight-average molecular weight of 1,000 or greater.

Moreover, the dispersant that can be used in the present invention is preferably a polymeric dispersant having a weight-average molecular weight of 2,000 to 50,000, and more preferably a polymeric dispersant having a weight-average molecular weight of 3,000 to 30,000. When the weight-average molecular weight is 2,000 or greater, excellent pigment dispersibility can be obtained, and when the weight-average molecular weight is no greater than 50,000, an ink composition having excellent continuous discharge stability can be obtained.

Examples of the polymeric dispersant include polymeric dispersants such as DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, and DisperBYK-182 (all manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (all manufactured by EFKA Additives), Disperse Aid 6, Disperse Aid 8, Disperse Aid 15, and Disperse Aid 9100 (manufactured by San Nopco Limited); various types of Solsperse dispersants such as Solsperse 3000, 5000, 9000, 12000, 13240, 13940, 17000, 22000, 24000, 26000, 28000, 32000, 36000, 39000, 41000, and 71000 (manufactured by Avecia); Adeka Pluronic L31, F38, L42, L44, L61, L64, F68, L72, P95, F77, P84, F87, P94, L101, P103, F108, L121, and P-123 (manufactured by Adeka Corporation), Isonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

### (E) Other component

The ink composition of the present invention may comprise another component as necessary. Examples of the other component include a sensitizer, a cosensitizer, another polymerizable compound, a surfactant, a UV absorber, an antioxidant, an antifading agent, a conductive salt, a solvent, a polymer compound, and a basic compound.

### Sensitizer

The ink composition of the present invention may contain a sensitizer in order to promote decomposition of the above-mentioned polymerization initiator by absorbing specific actinic radiation, in particular when used for inkjet recording. The sensitizer absorbs specific actinic radiation and attains an electronically excited state. The sensitizer in the electronically excited state causes actions such as electron transfer, energy transfer, or heat generation upon contact with the polymerization initiator. This causes the polymerization initiator to undergo a chemical change and decompose, thus forming a radical, an acid, or a base.

As a sensitizer in the ink composition of the present invention, it is preferable to use a sensitizing dye.

Preferred examples of the sensitizing dye include those that belong to compounds below and have an adsorption wavelength in the region of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

Preferred examples of the sensitizing dye include compounds represented by Formulae (IX) to (XIII) below.

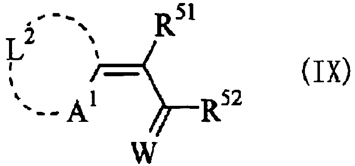

In Formula (IX), A¹ denotes a sulfur atom or NR⁵⁰, R⁵⁰ denotes an alkyl group or an aryl group, L² denotes a non-metallic atomic group forming a basic nucleus of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.

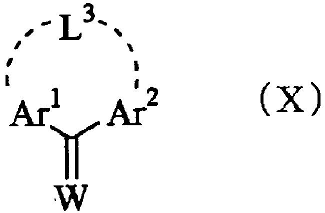

In Formula (X), Ar¹ and Ar² independently denote an aryl group and are connected to each other via a bond of -L³-. Here, L³ denotes -O- or -S-. W has the same meaning as that shown in Formula (IX).

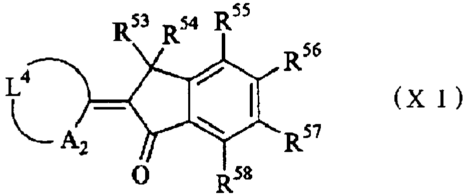

In Formula (XI), A₂ denotes a sulfur atom or NR⁵⁹, L⁴ denotes a non-metallic atomic group forming a basic nucleus of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.

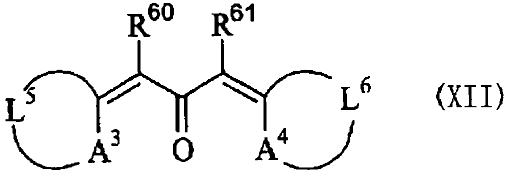

In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic nucleus of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.

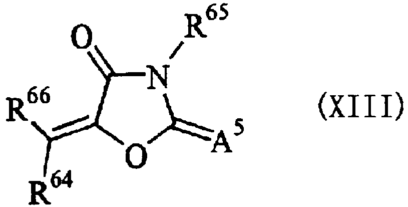

In Formula (XIII), R⁶⁶ denotes an aromatic ring or a hetero ring, which may have a substituent, and A⁵ denotes an oxygen atom, a sulfur atom, or -NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Specific examples of the compounds represented by Formulae (IX) to (XIII) include (E-1) to (E-20) listed below.

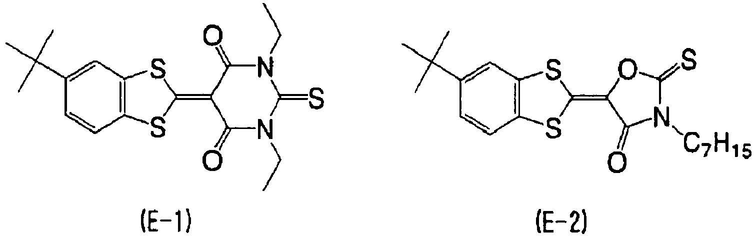

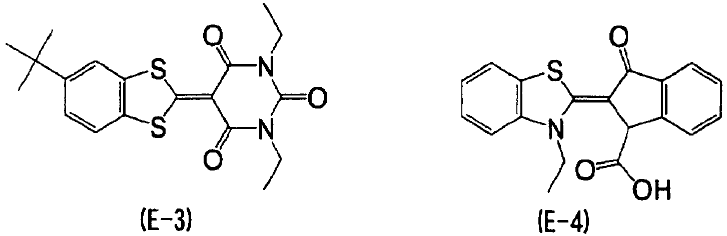

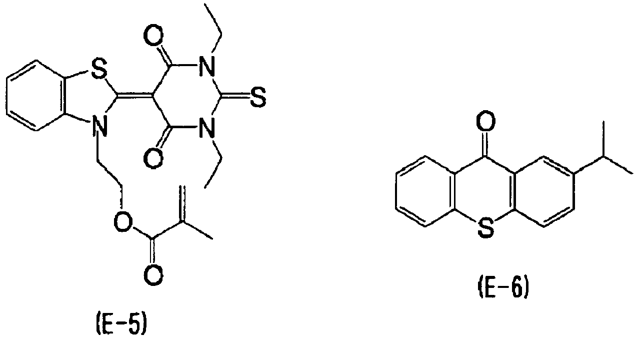

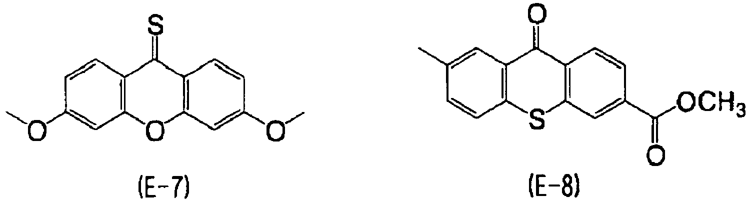

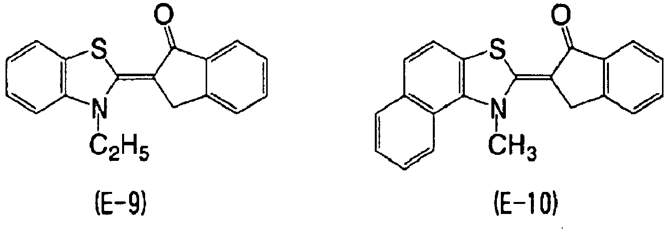

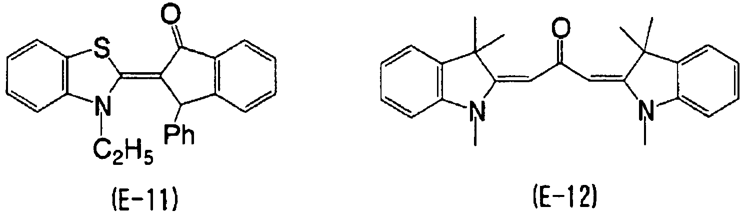

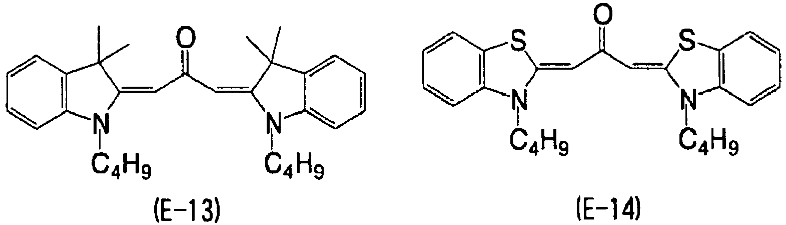

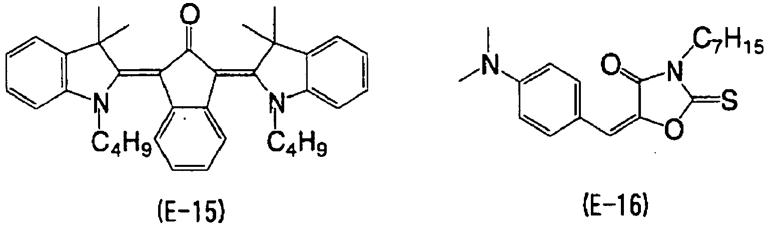

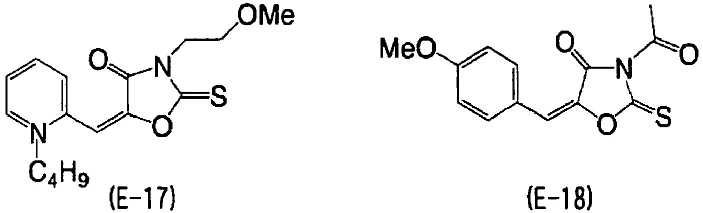

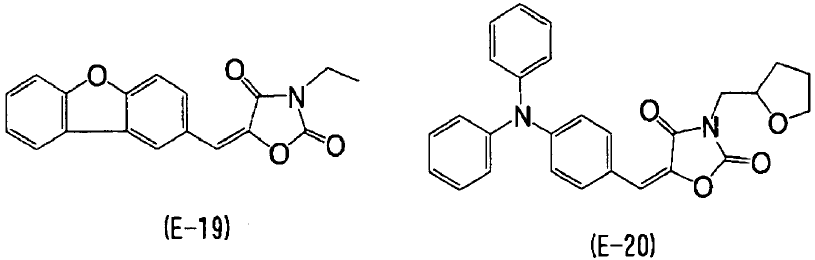

The content of the sensitizer in the ink composition of the present invention is appropriately selected according to the intended purpose, but it is generally preferably 0.05 to 4 wt % relative to the weight of the entire ink composition.

### Cosensitizer

The ink composition of the present invention preferably comprises a cosensitizer. In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl p-dimethylaminobenzoate, p-formyldimethylaniline, and p-methylthiod imethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. N-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H, Ge-H compounds described in JP-A-8-54735.

The content of the cosensitizer in the ink composition of the present invention is appropriately selected according to the intended purpose, but it is generally preferably 0.05 to 4 wt % relative to the weight of the entire ink composition.

### Surfactant

It is preferable to add a surfactant to the ink composition of the present invention in order to impart long-term discharge stability.

As the surfactant, those described in JP-A-62-173463 and 62-183457 can be cited. Examples thereof include anionic surfactants such as dialkylsulfosuccinic acid salts, alkylnaphthalene sulfonic acid salts, and fatty acid salts, nonionic surfactants such as polyoxyethylene alkyl ethers, polyoxyethylene alkyl aryl ethers, acetylene glycols, and polyoxyethylene/polyoxypropylene block copolymers, and cationic surfactants such as alkylamine salts and quaternary ammonium salts. An organofluoro compound may be used instead of the above-mentioned surfactant. The organofluoro compound is preferably hydrophobic. Examples of the organofluoro compound include fluorine-based surfactants, oil-like fluorine-based compounds (e.g. fluorine oil), solid fluorine compound resins (e.g. tetrafluoroethylene resin), and those described in JP-B-57-9053 (paragraphs 8 to 17) and JP-A-62-135826.

The content of the surfactant in the ink composition of the present invention is appropriately selected according to the intended purpose and is generally preferably 0.0001 to 1 wt % relative to the weight of the entire ink composition.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, in-danes, chromans, alkoxyanilines, and heterocycles, and the metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is preferably on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

### Basic compound

The basic compound is preferably added from the viewpoint of improving the storage stability of the ink composition. A basic compound that can be used in the present invention is a known basic compound, and preferred examples thereof include a basic inorganic compound such as an inorganic salt or a basic organic compound such as an amine.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of ink composition

In the present invention, the ink composition has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

The surface tension of the ink composition of the present invention at 25°C is preferably 20 to 35 mN/m, and more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### (2) Inkjet recording method and inkjet recording device

The ink composition of the present invention is used for inkjet recording.

The inkjet recording method of the present invention is a method for forming an image by discharging the ink composition of the present invention onto a recording medium (support, recording material, etc.) for inkjet recording and curing the ink by irradiating the ink composition so discharged onto the recording medium with actinic radiation.

More particularly, the inkjet recording method of the present invention comprises (a¹) a step of discharging the ink composition of the present invention onto a recording medium and (b¹) a step of curing the ink composition by irradiating the ink composition so discharged with actinic radiation,

The inkjet recording method of the present invention comprises the steps (a¹) and (b¹) above and thus forms an image from the ink composition cured on the recording medium.

The printed material of the present invention is a printed material recorded by the inkjet recording method of the present invention.

The step (a¹) of the inkjet recording method of the present invention may employ an inkjet recording device that will be described in detail below.

### Inkjet recording device

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink onto a recording medium in step (a¹) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since it is desirable for the radiation curing type ink to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 50 mPa·s since a good discharge stability can be obtained. By employing this method, high discharge stability can be realized.

The radiation curing type ink composition such as the ink composition of the present invention generally has a viscosity that is higher than that of a normal ink composition or a water-based ink used for an inkjet recording ink, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink discharge temperature as constant as possible. In the present invention, the control range for the temperature is preferably ±5°C of a set temperature, more preferably ±2°C of the set temperature, and yet more preferably ±1°C of the set temperature.

The step (b¹) of curing the discharged ink composition by irradiating the ink composition with actinic radiation is now explained.

The ink composition discharged onto the recording medium cures upon exposure to actinic radiation. This is due to an initiating species such as a radical, an acid, or a base being generated by decomposition of the polymerization initiator contained in the ink composition of the present invention by irradiation with actinic radiation, the initiating species functioning so as to make a polymerization reaction of a radically polymerizable compound take place and to promote it. In this process, if a sensitizing colorant is present together with the polymerization initiator in the ink composition, the sensitizing colorant in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizing dye, the peak wavelength of the actinic radiation is, for example, 200 to 600 nm, preferably 300 to 450 nm, and more preferably 350 to 420 nm.

Furthermore, in the present invention, the polymerization initiation system has sufficient sensitivity for low output actinic radiation. The actinic radiation is applied therefore so that the illumination intensity on the exposed surface is, for example, 10 to 4,000 mW/cm², and preferably 20 to 2,500 mW/cm².

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition of the present invention is desirably exposed to such actinic radiation for, for example, 0.01 to 120 sec., and preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (e.g. 0.01 to 0.5 sec., preferably 0.01 to 0.3 sec., and more preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such a recording method, it is possible to maintain a uniform dot diameter for landed ink even for various types of recording media having different surface wettability, thereby improving the image quality. In order to obtain a color image, it is preferable to superimpose colors in order from those with a low lightness. By superimposing inks in order from one with low lightness, it is easy for radiation to reach a lower ink, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way, the ink composition of the present invention is cured by irradiation with actinic radiation in high sensitivity to thus form an image on the surface of the recording medium.

The inkjet recording method of the present invention may suitably employ the ink set of the present invention. The order in which colored ink compositions are discharged is not particularly limited, but it is preferable to apply to a recording medium from a colored ink composition having a low lightness; when the ink composition of the present invention and yellow, cyan, magenta, and black are used, they are preferably applied on top of the recording medium in the order ink composition(s) of the present invention → yellow → cyan → magenta → black. Furthermore, when white is additionally used, they are preferably applied on top of the recording medium in the order white → ink composition(s) of the present invention → yellow → cyan → magenta → black. Moreover, the present invention is not limited thereto, and an ink set of the present invention comprising a total of eight colors, that is, light cyan, light magenta, and light black ink compositions of the present invention and cyan, magenta, black, white, and yellow dark ink compositions may preferably be used, and in this case they are applied on top of the recording medium in the order white → light cyan → light magenta → light black → yellow → cyan → magenta → black.

In the present invention, the recording medium is not particularly limited, and a recording medium known as a support or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may suitably be used.

### Ink set

The ink set of the present invention is not particularly limited as long as it is an ink set having two or more types of ink compositions in combination, the ink set comprising in combination at least one ink composition of the present invention and another ink composition of the present invention or an ink composition other than one of the present invention, and it is preferable for the ink set to comprise at least one ink composition of the present invention having a color selected from light magenta, light cyan, and light black (gray).

Furthermore, the ink set of the present invention may be suitably used in the inkjet recording method of the present invention.

In order to obtain a full color image using the ink composition of the present invention, it is preferable to use, as the ink set of the present invention, an ink set comprising in combination four dark ink compositions of yellow, cyan, magenta, and black and at least one ink composition of the present invention, it is more preferable to use an ink set comprising in combination five dark ink compositions of yellow, cyan, magenta, black, and white and at least one ink composition of the present invention, and it is yet more preferable to use an ink set comprising in combination five dark ink compositions of yellow, cyan, magenta, black, and white and three, that is, light cyan, light magenta, and light black ink compositions of the present invention.

The 'dark ink composition' referred to in the present invention means an ink composition for which the content of the colorant exceeds 1 wt % of the entire ink composition. The colorant is not particularly limited; a known colorant may be used, and examples thereof include a pigment and an oil-soluble dye.

Furthermore, needless to say, the ink set of the present invention may comprise an ink composition containing a colorant other than a pigment at 1 wt % or less.

When the ink set of the present invention comprises at least one dark ink composition and the ink composition of the present invention, and the dark ink composition and the ink composition of the present invention employ colorants of similar colors, the ratio of the colorant concentration of the dark ink composition to the colorant concentration of the ink composition of the present invention is preferably dark ink composition:light ink composition = 15:1 to 4:1, more preferably 12:1 to 4:1, and yet more preferably 10:1 to 4.5:1. When the ratio is in the above-mentioned range, a vivid full color image with little feeling of grain can be obtained.

### EXAMPLES

The present invention is explained in further detail by reference to Examples and Comparative Examples. However, the present invention should not be construed as being limited to these Examples.

'Parts' described below means 'parts by weight' unless otherwise specified.

Materials for radically polymerizable compositions used in the present invention are as follows.
IRGALITE BLUE GLVO (cyan pigment, manufactured by Ciba Specialty Chemicals)
CINQUASIA MAGENTA RT-335 D (magenta pigment, manufactured by Ciba Specialty Chemicals)
NOVOPERM YELLOW H2G (yellow pigment, manufactured by Clariant)
SPECIAL BLACK 250 (black pigment, manufactured by Ciba Specialty Chemicals)
KRONOS 2300 (white pigment, manufactured by KRONOS)
*N*-Cyclohexylacrylamide (manufactured by DSM)
FANCRYL 512A (corresponding to compound example M-11, manufactured by Hitachi Chemical Co., Ltd.)
*N*-Vinylcaprolactam (NVC, manufactured by BASF)
KAYARAD DPCA-60 (DPCA, caprolactone-modified dipentaerythritol hexaacrylate, manufactured by Nippon Kayaku Co., Ltd.)
Solsperse 32000 (dispersant, manufactured by Noveon)
Solsperse 36000 (dispersant, manufactured by Noveon)
Solsperse 22000 (dispersant, manufactured by Noveon)
Disper BYK-168 (polymeric dispersant, manufactured by BYK Chemie, solids content 30%)
NK ESTER AMP-10G (phenoxyethyl acrylate, manufactured by Shin-Nakamura Chemical Co., Ltd.)
Rapi-Cure DVE-3 (triethylene glycol divinyl ether, manufactured by ISP Europe) FIRSTCURE ST-1 (polymerization inhibitor, manufactured by ChemFirst)
Lucirin TPO (photopolymerization initiator, manufactured by BASF)
Benzophenone (photopolymerization initiator, manufactured by Wako Pure Chemical Industries, Ltd.)
IRGACURE 184 (photopolymerization initiator, manufactured by Ciba Specialty Chemicals)
KF-353 (silicone-based surfactant, manufactured by Shin-Etsu Chemical Co., Ltd.)
BYK-307 (silicone-based surfactant, manufactured by BYK Chemie) FIRSTCURE ITX (sensitizer, manufactured by ChemFirst)

Materials for cationically polymerizable compositions used in the present invention are as follows.

### Pigments

IRGALITE BLUE GLVO (cyan pigment, manufactured by Ciba Specialty Chemicals)
CINQUASIA MAGENTA RT-335 D (magenta pigment, manufactured by Ciba Specialty Chemicals)
NOVOPERM YELLOW H2G (yellow pigment, manufactured by Clariant)
SPECIAL BLACK 250 (black pigment, manufactured by Ciba Specialty Chemicals)
Tipaque CR60-2 (white pigment, manufactured by Ishihara Sangyo Kaisha Ltd.)

### Dispersants

Solsperse 32000 (manufactured by Noveon)
Solsperse 36000 (manufactured by Noveon)
Solsperse 22000 (manufactured by Noveon)

### Monomers

### OXT-221 (manufactured by Toagosei Co., Ltd.)

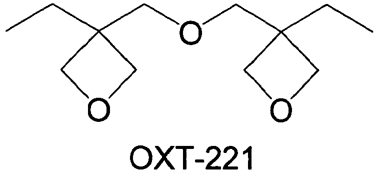

### Cyracure UVR-6105 (manufactured by Dow Chemical)

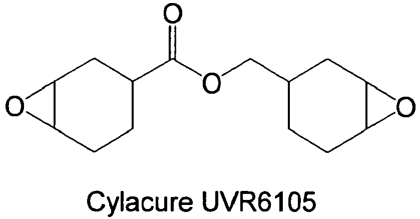

### OXT-211 (manufactured by Toagosei Co., Ltd.)

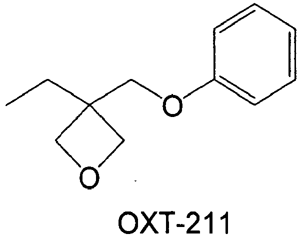

### OXT-212 (manufactured by Toagosei Co., Ltd.)

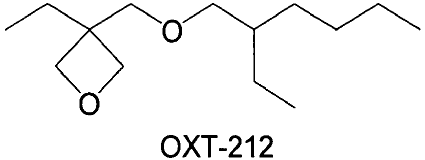

### Compound example C-A-1

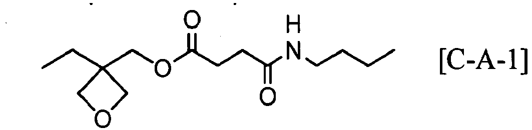

### Polymerization initiators

CPI-100P (sulfonium salt, manufactured by San-Apro Ltd.)
Dibutoxyanthracene (manufactured by Kawasaki Kasei Chemicals Ltd.)

### Surfactant

### BYK-307 (manufactured by BYK Chemie)

Mill bases for radically polymerizable compositions were prepared as follows.

### Preparation of cyan mill base A

300 parts by weight of IRGALITE BLUE GLVO, 600 parts by weight of Actilane 421, and 100 parts by weight of Solsperse 32000 were stirred and mixed to give cyan mill base A. Preparation of cyan mill base A was carried out by putting it into an M50 disperser motor mill (manufactured by Eiger) and dispersing using zirconia beads having a diameter of 0.65 mm at a peripheral speed of 9 m/s for 4 hours.

### Preparation of magenta mill base B

300 parts by weight of CINQUASIA MAGENTA RT-335 D, 600 parts by weight of Actilane 421, and 100 parts by weight of Solsperse 32000 were stirred and mixed to give magenta mill base B. Preparation of magenta mill base B was carried out by putting it into an M50 disperser motor mill (manufactured by Eiger) and dispersing using zirconia beads having a diameter of 0.65 mm at a peripheral speed of 9 m/s for 10 hours.

### Preparation of yellow mill base C

300 parts by weight of NOVOPERM YELLOW H2G, 600 parts by weight of Actilane 421, and 100 parts by weight of Solsperse 32000 were stirred and mixed to give yellow mill base C. Preparation of yellow mill base C was carried out by putting it into an M50 disperser motor mill (manufactured by Eiger) and dispersing using zirconia beads having a diameter of 0.65 mm at a peripheral speed of 9 m/s for 10 hours.

### Preparation of black mill base D

300 parts by weight of SPECIAL BLACK 250, 600 parts by weight of Actilane 421, and 100 parts by weight of Solsperse 32000 were stirred and mixed to give black mill base D. Preparation of black mill base D was carried out by putting it into an M50 disperser motor mill (manufactured by Eiger) and dispersing using zirconia beads having a diameter of 0.65 mm at a peripheral speed of 9 m/s for 7 hours.

### Preparation of white mill base E

500 parts by weight of Tipaque CR60-2, 450 parts by weight of NK ESTER AMP-10G, and 50 parts by weight of Solsperse 36000 were stirred and mixed to give white mill base E. Preparation of white mill base E was carried out by putting it into an M50 disperser motor mill (manufactured by Eiger) and dispersing using zirconia beads having a diameter of 0.65 mm at a peripheral speed of 9 m/s for 4 hours.

### Preparation of cyan mill base F

300 parts by weight of IRGALITE BLUE GLVO, 500 parts by weight of Actilane 421, and 200 parts by weight of Disper BYK-168 were stirred and mixed to give cyan mill base F. Preparation of cyan mill base F was carried out by putting it into an M50 disperser motor mill (manufactured by Eiger) and dispersing using zirconia beads having a diameter of 0.65 mm at a peripheral speed of 9 m/s for 4 hours.

### Preparation of magenta mill base G

300 parts by weight of CINQUASIA MAGENTA RT-335 D, 400 parts by weight of Actilane 421, and 300 parts by weight of Disper BYK-168 were stirred and mixed to give magenta mill base G. Preparation of magenta mill base G was carried out by putting it into an M50 disperser motor mill (manufactured by Eiger) and dispersing using zirconia beads having a diameter of 0.65 mm at a peripheral speed of 9 m/s for 10 hours.

### Preparation of black mill base H

300 parts by weight of SPECIAL BLACK 250, 500 parts by weight of Actilane 421, and 200 parts by weight of Disper BYK-168 were stirred and mixed to give black mill base H. Preparation of black mill base H was carried out by putting it into an M50 disperser motor mill (manufactured by Eiger) and dispersing using zirconia beads having a diameter of 0.65 mm at a peripheral speed of 9 m/s for 7 hours.

### Preparation of cyan mill base I

300 parts by weight of IRGALITE BLUE GLVO, 600 parts by weight of Actilane 421, and 100 parts by weight of Solsperse 22000 were stirred and mixed to give cyan mill base I. Preparation of cyan mill base I was carried out by putting it into an M50 disperser motor mill (manufactured by Eiger) and dispersing using zirconia beads having a diameter of 0.65 mm at a peripheral speed of 9 m/s for 4 hours.

Mill bases for cationically polymerizable compositions were prepared as follows.

### Preparation of cyan mill base J

300 parts by weight of IRGALITE BLUE GLVO, 600 parts by weight of OXT-212, and 100 parts by weight of Solsperse 32000 were stirred and mixed to give cyan mill base J. Preparation of cyan mill base J was carried out by putting it into an M50 disperser motor mill (manufactured by Eiger) and dispersing using zirconia beads having a diameter of 0.65 mm at a peripheral speed of 9 m/s for 3 hours.

### Preparation of magenta mill base K

300 parts by weight of CINQUASIA MAGENTA RT-335 D, 600 parts by weight of OXT-212, and 100 parts by weight of Solsperse 32000 were stirred and mixed to give magenta mill base K. Preparation of magenta mill base K was carried out by putting it into an M50 disperser motor mill (manufactured by Eiger) and dispersing using zirconia beads having a diameter of 0.65 mm at a peripheral speed of 9 m/s for 8 hours.

### Preparation of yellow mill base L

300 parts by weight of NOVOPERM YELLOW H2G, 600 parts by weight of OXT-212, and 100 parts by weight of Solsperse 32000 were stirred and mixed to give yellow mill base L. Preparation of yellow mill base L was carried out by putting it into an M50 disperser motor mill (manufactured by Eiger) and dispersing using zirconia beads having a diameter of 0.65 mm at a peripheral speed of 9 m/s for 8 hours.

### Preparation of black mill base M

300 parts by weight of SPECIAL BLACK 250, 600 parts by weight of OXT-212, and 100 parts by weight of Solsperse 32000 were stirred and mixed to give black mill base M. Preparation of black mill base M was carried out by putting it into an M50 disperser motor mill (manufactured by Eiger) and dispersing using zirconia beads having a diameter of 0.65 mm at a peripheral speed of 9 m/s for 5.5 hours.

### Preparation of white mill base N

500 parts by weight of Tipaque CR60-2, 450 parts by weight of OXT-212, and 50 parts by weight of Solsperse 36000 were stirred and mixed to give white mill base N. Preparation of white mill base N was carried out by putting it into an M50 disperser motor mill (manufactured by Eiger) and dispersing using zirconia beads having a diameter of 0.65 mm at a peripheral speed of 9 m/s for 3 hours.

### Preparation of cyan mill base O

300 parts by weight of IRGALITE BLUE GLVO, 500 parts by weight of OXT-212, and 200 parts by weight of Disper BYK-168 were stirred and mixed to give cyan mill base O. Preparation of cyan mill base O was carried out by putting it into an M50 disperser motor mill (manufactured by Eiger) and dispersing using zirconia beads having a diameter of 0.65 mm at a peripheral speed of 9 m/s for 3 hours.

### Preparation of magenta mill base P

300 parts by weight of CINQUASIA MAGENTA RT-335 D, 400 parts by weight of OXT-212, and 300 parts by weight of Disper BYK-168 were stirred and mixed to give magenta mill base P. Preparation of magenta mill base P was carried out by putting it into an M50 disperser motor mill (manufactured by Eiger) and dispersing using zirconia beads having a diameter of 0.65 mm at a peripheral speed of 9 m/s for 8 hours.

### Preparation of black mill base Q

300 parts by weight of SPECIAL BLACK 250, 500 parts by weight of OXT-212, and 200 parts by weight of Disper BYK-168 were stirred and mixed to give black mill base Q. Preparation of black mill base Q was carried out by putting it into an M50 disperser motor mill (manufactured by Eiger) and dispersing using zirconia beads having a diameter of 0.65 mm at a peripheral speed of 9 m/s for 5.5 hours.

### Preparation of cyan mill base R

300 parts by weight of IRGALITE BLUE GLVO, 600 parts by weight of OXT-212, and 100 parts by weight of Solsperse 22000 were stirred and mixed to give cyan mill base R. Preparation of cyan mill base R was carried out by putting it into an M50 disperser motor mill (manufactured by Eiger) and dispersing using zirconia beads having a diameter of 0.65 mm at a peripheral speed of 9 m/s for 3 hours.

### Inkjet image recording method

Subsequently, recording was carried out on a recording medium using an experimental inkjet recording device having a piezo type inkjet nozzle. The ink supply system comprised a main tank, a supply pipe, an ink supply tank immediately before an inkjet head, a filter, and a piezo type inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. The piezo type inkjet head was driven so as to discharge multisize dots of 8 to 30 pL at a resolution of 720 x 720 dpi. The exposure system, the main scanning speed, and the discharge frequency were adjusted so that, after landing, UV light was focused to give an exposure area illumination intensity of 1,630 mW/cm², and irradiation started 0.1 sec. after the ink landed on the recording medium. The cumulative amount of light applied to an image was adjusted so as to be 1,500 mJ/cm². The UV lamp employed a HAN250NL high-cure mercury lamp (manufactured by GS Yuasa Corporation). Here, dpi referred to in the present invention denotes the number of dots per 2.54 cm. The recording medium employed an E5000 ester film (film thickness 125 µm, manufactured by Toyobo Co., Ltd.).

### Method for measuring curing sensitivity

In accordance with the above-mentioned inkjet recording method, a solid printed image having an average film thickness of 12 µm was formed, and the stickiness of the image was evaluated by touch after the image was irradiated with ultraviolet rays.

The curing sensitivity was evaluated using the following criteria.
3: No stickiness on image.
2: Image was slightly sticky.
1: Uncured ink was transferred to the hand.

### Method for evaluating flexibility: bending test

In the Examples, as a method for evaluating the flexibility of a cured film, a bending test was carried out.

In accordance with the above-mentioned inkjet image recording method, an E5000 ester film (film thickness 125 µm, manufactured by Toyobo Co., Ltd.) was used as a recording medium, and three solid printed images having average image area film thicknesses of 12 µm, 24 µm, and 36 µm were formed. The bending test involved bending once at 25°C the recording medium on which an image had been formed, and an evaluation was carried out of the presence or absence of cracks in the image area. In general, when the average film thickness was large, the distortion occurring in the image area when bending the image area became large, and cracks easily occurred. That is, testing whether or not cracks occurred in an image area having a larger film thickness gave a measure of the flexibility.

The evaluation criteria were as follows.
4: No cracks occurred at all in the bent portion of an image area for samples having average film thicknesses of 12 µm, 24 µm, and 36 µm.
3: No cracks occurred for samples having average film thicknesses of 12 µm and 24 µm, but cracks occurred in the bent portion of an image area of a sample having an average film thickness of 36 µm.
2: No cracks occurred for a sample having an average film thickness of 12 µm, but cracks occurred in the bent portion of an image area of samples having average film thicknesses of 24 µm and 36 µm.
1: Cracks occurred in the bent portion of an image area for all samples having average film thicknesses of 12 µm, 24 µm, and 36 µm.

### Test for storage stability over time

In the present Examples, as a method for evaluating the storage stability of an ink, after storing while heating at 60°C for 1 week, change in particle size, change in ink viscosity, and whether or not a precipitate formed were evaluated.

### Method for measuring viscosity

Measurement of viscosity in the Examples was carried out using a Brookfield LVDV-I type B viscometer (manufactured by Brookfield) at 25°C with a rotor rotational speed of 20 rpm.

### Method for measuring particle size

In the present Examples, particle size was measured using an FPAR-1000 (manufactured by Otsuka Electronics Co., Ltd.). When measuring, OXT-221 was used as a diluent solvent in order to adjust the concentration.

### Example 1 (Comparative Example)

The components below were stirred using a high-speed water-cooled stirrer to give a light cyan UV inkjet ink. The viscosity was 17 mPa·s.

| | |
|---|---|
| (A) (B) (D) Cyan mill base A | 1.2 parts |
| (D) Solsperse 32000 | 0.1 parts |
| (B) *N*-Vinylcaprolactam | 29.7 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 2 (Comparative Example)

The components below were stirred using a high-speed water-cooled stirrer to give a light magenta UV inkjet ink. The viscosity was 17 mPa·s.

| | |
|---|---|
| (A) (B) (D) Magenta mill base B | 2.3 parts |
| (D) Solsperse 32000 | 0.4 parts |
| (B) *N*-Vinylcaprolactam | 25.0 parts |
| (B) FANCRYL 512A | 25.3 parts |
| (B) NK ESTER AMP-10G | 23.0 parts |
| (B) KAYARAD DPCA-60 | 1.4 parts |
| (B) Rapi-Cure DVE-3 | 3.0 parts |
| FIRSTCURE ST-1 | 0.3 parts |
| (C) Lucirin TPO | 9.0 parts |
| (C) Benzophenone | 3.2 parts |
| (C) Firstcure ITX | 6.04 parts |
| KF-353 | 0.06 parts |

### Ink evaluation

Inkjet recording was carried out using the ink composition thus obtained. The results of evaluations are given in Table 1.

### Example 3

The components below were stirred using a high-speed water-cooled stirrer to give a light black UV inkjet ink. The viscosity was 17 mPa·s.

**Light black ink composition**

| | |
|---|---|
| (A) (B) (D) Black mill base D | 0.8 parts |
| (D) Solsperse 32000 | 0.2 parts |
| (B) *N*-Vinylcaprolactam | 29.0 parts |
| (B) FANCRYL 512A | 25.5 parts |
| (B) NK ESTER AMP-10G | 24.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 4

The components below were stirred using a high-speed water-cooled stirrer to give a light cyan UV inkjet ink. The viscosity was 17 mPa·s.

| | |
|---|---|
| (A) (B) (D) Cyan mill base A | 1.2 parts |
| (D) Solsperse 32000 | 0.8 parts |
| (B) *N*-Vinylcaprolactam | 30.4 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 5

The components below were stirred using a high-speed water-cooled stirrer to give a light cyan UV inkjet ink. The viscosity was 18 mPa·s.

| | |
|---|---|
| (A) (B) (D) Cyan mill base A | 1.2 parts |
| (D) Solsperse 32000 | 2.0 parts |
| (B) *N*-Vinylcaprolactam | 30.4 parts |
| (B) FANCRYL 512A | 39.5 parts |
| (B) NK ESTER AMP-1 0G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 6

The components below were stirred using a high-speed water-cooled stirrer to give a light cyan UV inkjet ink. The viscosity was 20 mPa·s.

| | |
|---|---|
| (A) (B) (D) Cyan mill base A | 1.2 parts |
| (D) Solsperse 32000 | 3.0 parts |
| (B) *N*-Vinylcaprolactam | 30.4 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 7

The components below were stirred using a high-speed water-cooled stirrer to give a light cyan UV inkjet ink. The viscosity was 19 mPa·s.

| | |
|---|---|
| (A) (B) (D) Cyan mill base A | 2.4 parts |
| (D) Solsperse 32000 | 3.0 parts |
| (B) *N*-Vinylcaprolactam | 30.4 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 8

The components below were stirred using a high-speed water-cooled stirrer to give a light cyan UV inkjet ink. The viscosity was 20 mPa·s.

| | |
|---|---|
| (A) (B) (D) Cyan mill base A | 3.0 parts |
| (D) Solsperse 32000 | 4.0 parts |
| (B) *N*-Vinylcaprolactam | 30.4 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 9

The components below were stirred using a high-speed water-cooled stirrer to give a light cyan UV inkjet ink. The viscosity was 17 mPa·s.

| | |
|---|---|
| (A) (B) (D) Cyan mill base F | 1.2 parts |
| (D) Disper BYK-168 | 5.0 parts |
| (B) *N*-Vinylcaprolactam | 26.7 parts |
| (B) FANCRYL 512A | 37.6 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 10

The components below were stirred using a high-speed water-cooled stirrer to give a light magenta UV inkjet ink. The viscosity was 17 mPa·s.

| | |
|---|---|
| (A) (B) (D) Magenta mill base G | 2.3 parts |
| (D) Disper BYK-168 | 6.0 parts |
| (B) *N*-Vinylcaprolactam | 23.0 parts |
| (B) FANCRYL 512A | 21.7 parts |
| (B) NK ESTER AMP-1 0G | 23.0 parts |
| (B) KAYARAD DPCA-60 | 1.4 parts |
| (B) Rapi-Cure DVE-3 | 3.0 parts |
| FIRSTCURE ST-1 | 0.3 parts |
| (C) Lucirin TPO | 9.0 parts |
| (C) Benzophenone | 3.2 parts |
| (C) FIRSTCURE ITX | 6.04 parts |
| KF-353 | 0.06 parts |

### Ink evaluation

Inkjet recording was carried out using the ink composition thus obtained. The results of evaluations are given in Table 1.

### Example 11

The components below were stirred using a high-speed water-cooled stirrer to give a light black UV inkjet ink. The viscosity was 17 mPa·s.

| | |
|---|---|
| (A) (B) (D) Black mill base H | 0.8 parts |
| (D) Disper BYK-168 | 5.0 parts |
| (B) *N*-Vinylcaprolactam | 27.0 parts |
| (B) FANCRYL 512A | 25.5 parts |
| (B) NK ESTER AMP-1 0G | 24.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 12

The components below were stirred using a high-speed water-cooled stirrer to give a light cyan UV inkjet ink. The viscosity was 17 mPa·s.

| | |
|---|---|
| (A) (B) (D) Cyan mill base I | 1.2 parts |
| (D) Solsperse 22000 | 0.4 parts |
| (B) *N*-Vinylcaprolactam | 29.7 parts |
| (B) FANCRYL 512A | 39.5 parts |
| (B) NK ESTER AMP-1 0G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 13 (Comparative Example)

The components below were stirred using a high-speed water-cooled stirrer to give a light cyan UV inkjet ink. The viscosity was 21 mPa·s.

| | |
|---|---|
| (A) (B) (D) Cyan mill base A | 1.2 parts |
| (D) Solsperse 32000 | 0.1 parts |
| (B) *N*-Vinylcaprolactam | 29.7 parts |
| (B) FANCRYL 512A | 29.5 parts |
| (B) *N*-Cyclohexylacrylamide | 19.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 14 (Comparative Example)

The components below were stirred using a high-speed water-cooled stirrer to give a light cyan UV inkjet ink. The viscosity was 21 mPa·s.

| | |
|---|---|
| (A) (B) (D) Cyan mill base A | 1.2 parts |
| (D) Solsperse 32000 | 0.1 parts |
| (B) *N*-Vinylcaprolactam | 29.7 parts |
| (B) FANCRYL 512A | 29.5 parts |
| (B) SR 509 | 19.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Comparative Example 1

The components below were stirred using a high-speed water-cooled stirrer to give a light cyan UV inkjet ink. The viscosity was 17 mPa·s.

| | |
|---|---|
| (A) (B) (D) Cyan mill base A | 1.2 parts |
| (B) *N*-Vinylcaprolactam | 29.8 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Comparative Example 2

The components below were stirred using a high-speed water-cooled stirrer to give a light cyan UV inkjet ink. The viscosity was 17 mPa·s.

| | |
|---|---|
| (A) (B) (D) Cyan mill base F | 1.2 parts |
| (B) *N*-Vinylcaprolactam | 29.8 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Comparative Example 3

The components below were stirred using a high-speed water-cooled stirrer to give a light cyan UV inkjet ink. The viscosity was 17 mPa·s.

| | |
|---|---|
| (A) (B) (D) Cyan mill base I | 1.2 parts |
| (B) *N*-Vinylcaprolactam | 29.8 parts |
| (B) FANCRYL 512A | 39.5 parts |
| (B) NK ESTER AMP-10G | 9.5 parts |
| (B) KAYARAD DPCA-60 | 2.0 parts |
| (B) Rapi-Cure DVE-3 | 3.0 parts |
| FIRSTCURE ST-1 | 0.3 parts |
| (C) Lucirin TPO (photoinitiator manufactured by BASF) | 9.0 parts |
| (C) Benzophenone (photoinitiator) | 3.2 parts |
| (C) IRGACURE 184 (photoinitiator manufactured by CSC) | 2.44 parts |
| KF-353 | 0.06 parts |

### Ink evaluation

Inkjet recording was carried out using the ink composition thus obtained. The results of evaluations are given in Table 1.

### Example 15 (Comparative Example)

The components below were stirred using a high-speed water-cooled stirrer to give a light cyan UV inkjet ink. The viscosity was 31 mPa·s.

| | |
|---|---|
| (A) (B) (D) Cyan mill base J | 1.2 parts |
| (D) Solsperse 32000 | 0.2 parts |
| (B) OXT-221 | 14.9 parts |
| (B) UVR-6105 | 10.7 parts |
| (B) OXT-211 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 16 (Comparative Example)

The components below were stirred using a high-speed water-cooled stirrer to give a light magenta UV inkjet ink. The viscosity was 33 mPa·s.

| | |
|---|---|
| (A) (B) (D) Magenta mill base K | 2.4 parts |
| (D) Solsperse 32000 | 0.4 parts |
| (B) OXT-221 | 15.2 parts |
| (B) UVR-6105 | 16.9 parts |
| (B) OXT-211 | 52.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 17 (Comparative Example)

The components below were stirred using a high-speed water-cooled stirrer to give a light black UV inkjet ink. The viscosity was 31 mPa·s.

| | |
|---|---|
| (A) (B) (D) Black mill base L | 0.9 parts |
| (D) Solsperse 32000 | 0.2 parts |
| (B) OXT-221 | 13.9 parts |
| (B) UVR-6105 | 11.9 parts |
| (B) OXT-211 | 51.9 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 18 (Comparative Example)

The components below were stirred using a high-speed water-cooled stirrer to give a light cyan UV inkjet ink. The viscosity was 31 mPa·s.

| | |
|---|---|
| (A) (B) (D) Cyan mill base J | 1.2 parts |
| (D) Solsperse 32000 | 0.8 parts |
| (B) OXT-221 | 14.9 parts |
| (B) UVR-6105 | 10.7 parts |
| (B) OXT-211 | 60.6 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 19 (Comparative Example)

The components below were stirred using a high-speed water-cooled stirrer to give a light cyan UV inkjet ink. The viscosity was 32 mPa·s.

| | |
|---|---|
| (A) (B) (D) Cyan mill base J | 1.2 parts |
| (D) Solsperse 32000 | 2.0 parts |
| (B) OXT-221 | 14.9 parts |
| (B) UVR-6105 | 10.9 parts |
| (B) OXT-211 | 61.6 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 20 (Comparative Example)

The components below were stirred using a high-speed water-cooled stirrer to give a light cyan UV inkjet ink. The viscosity was 33 mPa·s.

| | |
|---|---|
| (A) (B) (D) Cyan mill base J | 1.2 parts |
| (D) Solsperse 32000 | 3.0 parts |
| (B) OXT-221 | 14.9 parts |
| (B) UVR-6105 | 11.9 parts |
| (B) OXT-211 | 61.6 parts |
| (C) CPI-100P | 12.0 parts |
| (C) Dibutoxyanthracene | 1.0 part |

### Ink evaluation

Inkjet recording was carried out using the ink composition thus obtained. The results of evaluations are given in Table 2.

### Example 21 (Comparative Example)

The components below were stirred using a high-speed water-cooled stirrer to give a light cyan UV inkjet ink. The viscosity was 32 mPa·s.

| | |
|---|---|
| (A) (B) (D) Cyan mill base J | 2.4 parts |
| (D) Solsperse 32000 | 0.2 parts |
| (B) OXT-221 | 13.7 parts |
| (B) UVR-6105 | 10.7 parts |
| (B) OXT-211 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 22 (Comparative Example)

The components below were stirred using a high-speed water-cooled stirrer to give a light cyan UV inkjet ink. The viscosity was 32 mPa·s.

| | |
|---|---|
| (A) (B) (D) Cyan mill base J | 3.0 parts |
| (D) Solsperse 32000 | 0.2 parts |
| (B) OXT-221 | 13.7 parts |
| (B) UVR-6105 | 10.7 parts |
| (B) OXT-211 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 23 (Comparative Example)

The components below were stirred using a high-speed water-cooled stirrer to give a light cyan UV inkjet ink. The viscosity was 31 mPa·s.

| | |
|---|---|
| (A) (B) (D) Cyan mill base O | 1.2 parts |
| (D) Disper BYK-168 | 5.0 parts |
| (B) OXT-221 | 14.1 parts |
| (B) UVR-6105 | 9.7 parts |
| (B) OXT-211 | 57.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 24 (Comparative Example)

The components below were stirred using a high-speed water-cooled stirrer to give a light magenta UV inkjet ink. The viscosity was 33 mPa·s.

| | |
|---|---|
| (A) (B) (D) Magenta mill base P | 2.4 parts |
| (D) Disper BYK-168 | 6.0 parts |
| (B) OXT-221 | 13.2 parts |
| (B) UVR-6105 | 13.9 parts |
| (B) OXT-211 | 51.4 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 25 (Comparative Example)

The components below were stirred using a high-speed water-cooled stirrer to give a light black UV inkjet ink. The viscosity was 31 mPa·s.

| | |
|---|---|
| (A) (B) (D) Black mill base Q | 0.9 parts |
| (D) Disper BYK-168 | 5.0 parts |
| (B) OXT-221 | 11.9 parts |
| (B) UVR-6105 | 9.9 parts |
| (B) OXT-211 | 51.1 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 26 (Comparative Example)

The components below were stirred using a high-speed water-cooled stirrer to give a light cyan UV inkjet ink. The viscosity was 31 mPa·s.

| | |
|---|---|
| (A) (B) (D) Cyan mill base R | 1.2 parts |
| (D) Solsperse 22000 | 0.6 parts |
| (B) OXT-221 | 14.5 parts |
| (B) UVR-6105 | 10.7 parts |
| (B) OXT-211 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 27 (Comparative Example)

The components below were stirred using a high-speed water-cooled stirrer to give a light cyan UV inkjet ink. The viscosity was 28 mPa·s.

| | |
|---|---|
| (A) (B) (D) Cyan mill base J | 1.2 parts |
| (D) Solsperse 32000 | 0.2 parts |
| (B) OXT-221 | 14.9 parts |
| (B) UVR-6105 | 10.7 parts |
| (B) OXT-212 | 30.0 parts |
| (B) Compound example C-A-1 | 30.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Example 28 (Comparative Example)

The components below were stirred using a high-speed water-cooled stirrer to give a light cyan UV inkjet ink. The viscosity was 21 mPa·s.

| | |
|---|---|
| (A) (B) (D) Cyan mill base J | 1.2 parts |
| (D) Solsperse 32000 | 0.2 parts |
| (B) OXT-221 | 14.9 parts |
| (B) UVR-6105 | 10.7 parts |
| (B) OXT-212 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Comparative Example 4

The components below were stirred using a high-speed water-cooled stirrer to give a light cyan UV inkjet ink. The viscosity was 31 mPa·s.

| | |
|---|---|
| (A) (B) (D) Cyan mill base J | 1.2 parts |
| (B) OXT-221 | 14.9 parts |
| (B) UVR-6105 | 10.7 parts |
| (B) OXT-211 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Comparative Example 5

The components below were stirred using a high-speed water-cooled stirrer to give a light cyan UV inkjet ink. The viscosity was 31 mPa·s.

| | |
|---|---|
| (A) (B) (D) Cyan mill base O | 1.2 parts |
| (B) OXT-221 | 14.9 parts |
| (B) UVR-6105 | 10.7 parts |
| (B) OXT-211 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Comparative Example 6

The components below were stirred using a high-speed water-cooled stirrer to give a light cyan UV inkjet ink. The viscosity was 31 mPa·s.

| | |
|---|---|
| (A) (B) (D) Cyan mill base R | 1.2 parts |
| (B) OXT-221 | 14.9 parts |
| (B) UVR-6105 | 10.7 parts |
| (B) OXT-211 | 60.0 parts |
| (C) CPI-100P | 12.0 parts |
| (C) Dibutoxyanthracene | 1.0 part |
| BYK-307 | 0.1 parts |

### Ink evaluation

Inkjet recording was carried out using the ink composition thus obtained. The results of evaluations are given in Table 2.

### Preparation of full color ink

### Preparation of cyan ink R1

The components below were stirred using a high-speed water-cooled stirrer to give a cyan UV inkjet ink. The viscosity was 20 mPa·s.

| | |
|---|---|
| Cyan mill base A | 6.0 parts |
| Disper BYK-168 | 2.0 parts |
| FANCRYL 512A | 57.5 parts |
| *N*-Vinylcaprolactam | 14.5 parts |
| KAYARAD DPCA-60 | 2.0 parts |
| Rapi-Cure DVE-3 | 3.0 parts |
| FIRSTCURE ST-1 | 0.3 parts |
| Lucirin TPO | 9.0 parts |
| Benzophenone | 3.2 parts |
| IRGACURE 184 | 2.44 parts |
| KF-353 | 0.06 parts |

### Preparation of magenta ink R2

The components below were stirred using a high-speed water-cooled stirrer to give a magenta UV inkjet ink. The viscosity was 23 mPa·s.

| | |
|---|---|
| Magenta mill base B | 13.0 parts |
| Disper BYK-168 | 2.0 parts |
| FANCRYL 512A | 55.4 parts |
| *N*-Vinylcaprolactam | 10.0 parts |
| KAYARAD DPCA-60 | 1.4 parts |
| Rapi-Cure DVE-3 | 3.0 parts |
| FIRSTCURE ST-1 | 0.3 parts |
| Lucirin TPO | 9.0 parts |
| Benzophenone | 3.2 parts |
| FIRSTCURE ITX | 3.00 parts |
| KF-353 | 0.06 parts |

### Preparation of yellow ink R3

The components below were stirred using a high-speed water-cooled stirrer to give a yellow UV inkjet ink. The viscosity was 22 mPa·s.

| | |
|---|---|
| Yellow mill base C | 13.0 parts |
| Disper BYK-168 | 2.0 parts |
| FANCRYL 512A | 58.4 parts |
| *N*-Vinylcaprolactam | 10.0 parts |
| KAYARAD DPCA-60 | 1.4 parts |
| Rapi-Cure DVE-3 | 3.0 parts |
| FIRSTCURE ST-1 | 0.3 parts |
| Lucirin TPO | 9.0 parts |
| Benzophenone | 3.2 parts |
| KF-353 | 0.06 parts |

### Preparation of black ink R4

The components below were stirred using a high-speed water-cooled stirrer to give a black UV inkjet ink. The viscosity was 19 mPa·s.

| | |
|---|---|
| Black mill base D | 6.0 parts |
| Disper BYK-168 | 2.0 parts |
| FANCRYL 512A | 57.5 parts |
| *N*-Vinylcaprolactam | 14.5 parts |
| KAYARAD DPCA-60 | 2.0 parts |
| Rapi-Cure DVE-3 | 3.0 parts |
| FIRSTCURE ST-1 | 0.3 parts |
| Lucirin TPO | 9.0 parts |
| Benzophenone | 3.2 parts |
| IRGACURE 184 | 2.44 parts |
| KF-353 | 0.06 parts |

### Preparation of white ink R5

The components below were stirred using a high-speed water-cooled stirrer to give a white UV inkjet ink. The viscosity was 24 mPa·s.

| | |
|---|---|
| White mill base E | 22.0 parts |
| FANCRYL 512A | 55.4 parts |
| *N*-Vinylcaprolactam | 12.0 parts |
| FIRSTCURE ST-1 | 0.05 parts |
| Lucirin TPO | 8.5 parts |
| IRGACURE 184 | 2.0 parts |
| BYK-307 | 0.05 parts |

### Preparation of cyan ink C1

The components below were stirred using a high-speed water-cooled stirrer to give a cyan UV inkjet ink. The viscosity was 30 mPa·s.

| | |
|---|---|
| Cyan mill base J | 6.0 parts |
| OXT-221 | 11.0 parts |
| UVR-6105 | 9.9 parts |
| OXT-211 | 60.0 parts |
| CPI-100P | 12.0 parts |
| Dibutoxyanthracene | 1.0 part |
| BYK-307 | 0.1 parts |

### Preparation of magenta ink C2

The components below were stirred using a high-speed water-cooled stirrer to give a magenta UV inkjet ink. The viscosity was 33 mPa·s.

| | |
|---|---|
| Magenta mill base K | 12.0 parts |
| OXT-221 | 11.0 parts |
| UVR-6105 | 11.9 parts |
| OXT-211 | 52.0 parts |
| CPI-100P | 12.0 parts |
| Dibutoxyanthracene | 1.0 part |
| BYK-307 | 0.1 parts |

### Preparation of yellow ink C3

The components below were stirred using a high-speed water-cooled stirrer to give a yellow UV inkjet ink. The viscosity was 34 mPa·s.

| | |
|---|---|
| Yellow mill base L | 12.0 parts |
| OXT-221 | 11.0 parts |
| UVR-6105 | 11.9 parts |
| OXT-211 | 52.0 parts |
| CPI-100P | 12.0 parts |
| Dibutoxyanthracene | 1.0 part |
| BYK-307 | 0.1 parts |

### Preparation of black ink C4

The components below were stirred using a high-speed water-cooled stirrer to give a black UV inkjet ink. The viscosity was 31 mPa·s.

| | |
|---|---|
| Black mill base M | 6.0 parts |
| OXT-221 | 11.0 parts |
| UVR-6105 | 9.9 parts |
| OXT-211 | 51.9 parts |
| CPI-100P | 12.0 parts |
| Dibutoxyanthracene | 1.0 part |
| BYK-307 | 0.1 parts |

### Preparation of white ink C5

The components below were stirred using a high-speed water-cooled stirrer to give a white UV inkjet ink. The viscosity was 36 mPa·s.

| | |
|---|---|
| White mill base N | 30.0 parts |
| OXT-221 | 10.0 parts |
| UVR-6105 | 8.9 parts |
| OXT-211 | 40.0 parts |
| CPI-100P | 10.0 parts |
| Dibutoxyanthracene | 1.0 part |
| BYK-307 | 0.1 parts |

### Example 29 (Partly Comparative Example)

### Inkjet image recording method (full color)

Full color recording was then carried out on a recording medium using an experimental inkjet recording device having a piezo type inkjet nozzle. The inkjet recording device had a total of eight ink supply systems, and each ink supply system independently comprised a main tank, a supply pipe, an ink supply tank immediately before an inkjet head, a filter, and a piezo type inkjet head. The ink tanks were charged respectively with the light cyan ink, the light magenta ink, and the light black ink prepared in Examples 1 to 3, and the cyan ink R1, the magenta ink R2, the yellow ink R3, the black ink R4, and the white ink R5, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. Eight of the piezo type inkjet heads were arranged in parallel and were driven simultaneously so as to discharge multisize dots of 8 to 30 pL at a resolution of 720 x 720 dpi. The exposure system, the main scanning speed, and the discharge frequency were adjusted so that, after landing, UV light was focused to give an exposure area illumination intensity of 1,630 mW/cm², and irradiation started 0.1 to 0.3 sec. after the ink landed on the recording medium. The cumulative amount of light applied to an image was adjusted so as to be 1,500 mJ/cm². The UV lamp employed an HAN250NL high-cure mercury lamp (manufactured by GS Yuasa Corporation). Here, dpi referred to in the present invention denotes the number of dots per 2.54 cm. The recording medium employed an E5000 ester film (film thickness 125 µm, manufactured by Toyobo Co., Ltd.). A 12 µm thick composite black solid image was formed using all 8 of the inks charged. The results are given in Table 1.

### Example 30 (Comparative Example)

A full color image was evaluated by the same method as in Example 29 except that the inks charged were changed to the light cyan ink, the light magenta ink, and the light black ink prepared in Examples 15 to 17, and the cyan ink C1, the magenta ink C2, the yellow ink C3, the black ink C4, and the white ink C5. The results are given in Table 2.

**(Table 1)**

| | Color | Formulation | | | | Storage stability evaluation | | | | | Curability test | Flexibility test |
|---|---|---|---|---|---|---|---|---|---|---|---|---|
| | | Pigment | Dispersant | | | Viscosity [mPa·s] | | Average particle size [µm] | | Precipitation | | |
| | | Amount added [wt%] | Material | Amount added [wt%] | Amount of dispersant per part by weight of pigment (parts by weight) | Immediately after preparation | After storage over time | Immediately after preparation | After storage over time | After storage over time | | |
| Ex. 1* | LC | 0.39 | S32000 | 0.22 | 0.56 | 17 | 19 | 0.12 | 0.12 | None | 3 | 4 |
| Ex. 2* | LM | 0.69 | S32000 | 0.63 | 0.91 | 17 | 18 | 0.15 | 0.16 | None | 3 | 4 |
| Ex. 3 | LK | 0.24 | S32000 | 0.35 | 1.46 | 17 | 17 | 0.10 | 0.11 | None | 3 | 4 |
| Ex. 4 | LC | 0.39 | S32000 | 0.92 | 2.36 | 17 | 18 | 0.12 | 0.12 | None | 3 | 4 |
| Ex. 5 | LC | 0.39 | S32000 | 2.12 | 5.44 | 18 | 19 | 0.12 | 0.13 | None | 3 | 4 |
| Ex. 6 | LC | 0.39 | S32000 | 3.12 | 8.00 | 20 | 20 | 0.13 | 0.14 | None | 3 | 4 |
| Ex. 7 | LC | 0.72 | S32000 | 3.24 | 4.50 | 19 | 19 | 0.11 | 0.12 | None | 3 | 4 |
| Ex. 8 | LC | 0.9 | S32000 | 4.30 | 4.78 | 20 | 21 | 0.12 | 0.13 | None | 3 | 4 |
| Ex. 9 | LC | 0.39 | BYK168 (solids) | 1.57 | 4.03 | 17 | 17 | 0.10 | 0.11 | None | 3 | 4 |
| Ex. 10 | LM | 0.69 | BYK168 (solids) | 2.01 | 2.91 | 17 | 17 | 0.11 | 0.11 | None | 3 | 4 |
| Ex. 11 | LK | 0.24 | BYK168 (solids) | 1.74 | 7.25 | 17 | 17 | 0.11 | 0.11 | None | 3 | 4 |
| Ex. 12 | LC | 0.36 | S22000 | 0.76 | 2.11 | 17 | 20 | 0.18 | 0.22 | None | 3 | 4 |
| Ex. 13 * | LC | 0.36 | S32000 | 0.22 | 0.61 | 21 | 22 | 0.12 | 0.18 | None | 3 | 4 |
| Ex. 14 * | LC | 0.36 | S32000 | 0.22 | 0.61 | 21 | 26 | 0.12 | 0.19 | None | 3 | 4 |
| Ex. 29** | Full color | - | - | - | - | - | - | - | - | - | 3 | 4 |
| Comp. Ex. 1 | LC | 0.36 | S32000 | 0.10 | 0.28 | 17 | 32 | 0.14 | 0.22 | Precipitate on bottom of bottle | 3 | 4 |
| Comp. Ex. 2 | LC | 0.36 | BYK168 (solids) | 0.10 | 0.28 | 17 | 26 | 0.12 | 0.19 | Precipitate on bottom of bottle | 3 | 4 |
| Comp. Ex. 3 | LC | 0.36 | S22000 | 0.10 | 0.28 | 17 | 54 | 0.18 | 0.48 | Precipitate on bottom of bottle | 3 | 4 |

| | | | | | | | | | | | | |
|---|---|---|---|---|---|---|---|---|---|---|---|---|
| * Comparative Example, not in accordance with the invention ** Partly Comparative Example | | | | | | | | | | | | |

**(Table 2)**

| | Color | Formulation | | | | Storage stability evaluation | | | | | Curability test | Flexibility |
|---|---|---|---|---|---|---|---|---|---|---|---|---|
| | | Pigment | Dispersant | | | Viscosity [mPa·s] | | Average particle size [µm] | | Precipitation | | |
| | | Amount added [wt%] | Material | Amount added [wt%] | Amount of dispersant per part by weight of pigment (parts by weight) | Immediately after preparation | After storage over time | Immediately after preparation | After storage over time | After storage over time | | |
| Ex. 15* | LC | 0.39 | S32000 | 0.32 | 0.82 | 31 | 33 | 0.16 | 0.18 | None | 3 | 4 |
| Ex. 16* | LM | 0.69 | S32000 | 0.63 | 0.91 | 33 | 35 | 0.23 | 0.26 | None | 3 | 4 |
| Ex. 17* | LK | 0.24 | S32000 | 0.35 | 1.46 | 31 | 31 | 0.10 | 0.11 | None | 3 | 4 |
| Ex. 18* | LC | 0.39 | S32000 | 0.92 | 2.36 | 31 | 32 | 0.16 | 0.16 | None | 3 | 4 |
| Ex. 19* | LC | 0.39 | S32000 | 2.12 | 5.44 | 32 | 33 | 0.16 | 0.16 | None | 3 | 4 |
| Ex. 20* | LC | 0.39 | S32000 | 3.12 | 8.00 | 33 | 34 | 0.17 | 0.17 | None | 3 | 4 |
| Ex. 21* | LC | 0.72 | S32000 | 3.24 | 4.50 | 32 | 33 | 0.16 | 0.17 | None | 3 | 4 |
| Ex. 22* | LC | 0.9 | S32000 | 4.30 | 4.78 | 32 | 33 | 0.16 | 0.16 | None | 3 | 4 |
| Ex. 23* | LC | 0.39 | BYK168 (solids) | 1.57 | 4.03 | 31 | 31 | 0.17 | 0.18 | None | 3 | 4 |
| Ex. 24* | LM | 0.69 | BYK168 (solids) | 2.01 | 2.91 | 33 | 33 | 0.23 | 0.24 | None | 3 | 4 |
| Ex. 25* | LK | 0.24 | BYK168 (solids) | 1.74 | 7.25 | 31 | 31 | 0.10 | 0.10 | None | 3 | 4 |
| Ex. 26* | LC | 0.36 | S22000 | 0.76 | 2.11 | 31 | 36 | 0.17 | 0.17 | None | 3 | 4 |
| Ex. 27* | LC | 0.36 | S32000 | 0.32 | 0.89 | 28 | 32 | 0.16 | 0.16 | None | 3 | 4 |
| Ex. 28* | LC | 0.36 | S32000 | 0.32 | 0.89 | 21 | 23 | 0.16 | 0.16 | None | 3 | 4 |
| Ex. 30* | Full color | - | - | - | - | - | - | - | - | - | 3 | 4 |
| Comp. Ex. 4 | LC | 0.36 | S32000 | 0.10 | 0.28 | 31 | 45 | 0.16 | 0.22 | Precipitate on bottom of bottle | 3 | 4 |
| Comp. Ex. 5 | LC | 0.36 | BYK168 (solids) | 0.10 | 0.28 | 31 | 38 | 0.17 | 0.20 | Precipitate on bottom of bottle | 3 | 4 |
| Comp. Ex. 6 | LC | 0.36 | S22000 | 0.10 | 0.28 | 31 | 65 | 0.16 | 0.32 | Precipitate on bottom of bottle | 3 | 4 |

| | | | | | | | | | | | | |
|---|---|---|---|---|---|---|---|---|---|---|---|---|
| * Comparative Example, not in accordance with the invention | | | | | | | | | | | | |

In Table 1 and table 2, 'S32000' denotes Solsperse 32000, 's22000' denotes Solsperse 22000, and 'BYK168' denotes Disper BYK-168.

## Claims

1. An ink composition comprising:
(A) a pigment;
(B) a polymerizable monomer;
(C) a polymerization initiator; and
(D) a dispersant,
the content of the pigment being no greater than 1 wt % of the entire ink composition, and
the ratio (D/A) of the weight A of the pigment and the weight D of the dispersant in the ink composition satisfying the relationship 1.2 ≤ D/A ≤ 10,
wherein the polymerizable monomer (B) includes a radically polymerizable monomer selected from the group consisting of an N-vinyllactam, a radically polymerizable monomer having an aromatic group, and a radically polymerizable monomer having a cyclic structure other than an aromatic group.

2. The ink composition according to Claim 1, wherein it comprises a polymerizable monomer having an amide bond.

3. The ink composition according to either Claim 1 or 2, wherein it comprises a polymerizable monomer having an aromatic group.

4. The ink composition according to any one of Claims 1 to 3, wherein it comprises a monofunctional polymerizable monomer.

5. An inkjet recording method comprising:
(a¹) a step of discharging the ink composition according to any one of Claims 1 to 4 onto a recording medium; and
(b¹) a step of curing the ink composition by irradiating the discharged ink composition with actinic radiation.

6. The inkjet recording method according to Claim 5, wherein the actinic radiation is emitted by a light-emitting diode that has a peak light emission wavelength in the range of 350 to 420 nm and gives a maximum illumination intensity on the surface of a recording medium of 10 to 2,000 mW/cm².

7. A printed material recorded by the inkjet recording method according to either Claim 5 or 6.

8. An ink set comprising at least one ink composition according to any one of Claims 1 to 4.

9. The ink set according to Claim 8, wherein it comprises at least one dark ink composition having a color selected from the group consisting of yellow, cyan, magenta, black, and white, and having a colorant content of greater than 1 wt % of the entire ink composition.

10. The ink set according to Claim 8, wherein it comprises at least one dark ink composition having a colorant content of greater than 1 wt % of the entire ink composition, and at least one ink composition according to any one of Claims 1 to 4 as a light ink, the dark ink and the light ink employing pigments or colorants of similar colors, and the ratio of the concentrations of the pigments or colorants for the dark ink and the light ink being dark ink:light ink = 15:1 to 4:1.

## Patentansprüche

1. Tintenzusammensetzung, umfassend:
(A) ein Pigment;
(B) ein polymerisierbares Monomer;
(C) einen Polymerisationsinitiator; und
(D) ein Dispergiermittel,
wobei der Gehalt des Pigments nicht mehr als 1 Gew.-% der gesamten Tintenzusammensetzung beträgt, und
das Verhältnis (D/A) des Gewichts A des Pigments und des Gewichts D des Dispergiermittels in der Tintenzusammensetzung die Beziehung 1,2 ≤ D/A ≤ 10 erfüllt,
wobei das polymerisierbare Monomer (B) ein radikalisch polymerisierbares Monomer einschließt, das ausgewählt ist aus der Gruppe bestehend aus einem N-Vinyllactam, einem radikalisch polymerisierbaren Monomer mit einer aromatischen Gruppe und einem radikalisch polymerisierbaren Monomer mit einer anderen zyklischen Struktur als einer aromatischen Gruppe.

2. Tintenzusammensetzung gemäß Anspruch 1, umfassend ein polymerisierbares Monomer mit einer Amidbindung.

3. Tintenzusammensetzung gemäß einem der Ansprüche 1 oder 2, umfassend ein polymerisierbares Monomer mit einer aromatischen Gruppe.

4. Tintenzusammensetzung gemäß einem der Ansprüche 1 bis 3, umfassend ein monofunktionelles polymerisierbares Monomer.

5. Tintenstrahlaufzeichnungsverfahren, umfassend:
(a¹) einen Schritt, bei dem die Tintenzusammensetzung gemäß einem der Ansprüche 1 bis 4 auf ein Aufzeichnungsmedium ausgestoßen wird; und
(b¹) einen Schritt, bei dem die Tintenzusammensetzung gehärtet wird, indem die ausgestoßene Tintenzusammensetzung mit aktinischer Strahlung bestrahlt wird.

6. Tintenstrahlaufzeichnungsverfahren gemäß Anspruch 5, wobei die aktinische Strahlung von einer Leuchtdiode emittiert wird, die eine Spitzenlichtemissionswellenlänge im Bereich von 350 bis 420 nm aufweist und eine maximale Beleuchtungsintensität auf der Oberfläche eines Aufzeichnungsmediums von 10 bis 2000 mW/cm² zeigt.

7. Bedrucktes Material, das durch das Tintenstrahlaufzeichnungsverfahren gemäß Anspruch 5 oder 6 aufgezeichnet wurde.

8. Tintensatz, umfassend mindestens eine Tintenzusammensetzung gemäß einem der Ansprüche 1 bis 4.

9. Tintensatz gemäß Anspruch 8, mindestens umfassend eine dunkle Tintenzusammensetzung, die eine Farbe aufweist, die ausgewählt ist aus der Gruppe bestehend aus Gelb, Cyan, Magenta, Schwarz, und Weiß, und die einen Farbstoffgehalt von mehr als 1 Gew.-% der gesamten Tintenzusammensetzung aufweist.

10. Tintensatz gemäß Anspruch 8, mindestens umfassend eine dunkle Tintenzusammensetzung mit einem Farbstoffgehalt von mehr als 1 Gew.-% der gesamten Tintenzusammensetzung und mindestens eine Tintenzusammensetzung gemäß einem der Ansprüche 1 bis 4 als helle Tinte, wobei die dunkle Tinte und die helle Tinte Pigmente oder Farbstoffe mit ähnlicher Farbe verwenden und das Konzentrationsverhältnis der Pigmente oder Farbstoffe für die dunkle Tinte und die helle Tinte lautet, dunkle Tinte : helle Tinte = 15:1 bis 4:1.

## Revendications

1. Composition d'encre comprenant :
(A) un pigment ;
(B) un monomère polymérisable ;
(C) un initiateur de polymérisation ; et
(D) un dispersant,
la teneur du pigment n'étant pas supérieure à 1 % en poids de la composition d'encre entière, et
le rapport (D/A) du poids A du pigment au poids D du dispersant dans la composition d'encre satisfaisant la relation 1,2 ≤ D/A ≤ 10,
dans laquelle le monomère polymérisable (B) comporte un monomère polymérisable par voie radicalaire choisi parmi le groupe constitué d'un N-vinyle lactame, d'un monomère polymérisable par voie radicalaire ayant un groupe aromatique, et d'un monomère polymérisable par voie radicalaire ayant une structure cyclique autre qu'un groupe aromatique.

2. La composition d'encre selon la revendication 1, qui comprend un monomère polymérisable ayant une liaison amide.

3. La composition d'encre selon la revendication 1 ou 2, qui comprend un monomère polymérisable ayant un groupe aromatique.

4. La composition d'encre selon l'une quelconque des revendications 1 à 3, qui comprend un monomère polymérisable monofonctionnel.

5. Procédé d'enregistrement à jet d'encre comprenant :
(a¹) une étape de décharge de la composition d'encre selon l'une quelconque des revendications 1 à 4 sur un support d'enregistrement ; et
(b¹) une étape de durcissement de la composition d'encre en irradiant la composition d'encre déchargée avec du rayonnement actinique.

6. Le procédé d'enregistrement à jet d'encre selon la revendication 5, dans lequel le rayonnement actinique est émis par une diode émettant de la lumière qui une longueur d'onde d'émission de lumière de crête dans le domaine de 350 à 420 nm et donne une intensité d'éclairage maximale sur la surface d'un support d'enregistrement de 10 à 2,000 mW/cm².

7. Matériau imprimé enregistré par le procédé d'enregistrement à jet d'encre selon la revendication 5 ou 6.

8. Jeu d'encre comprenant au moins une composition d'encre selon l'une quelconque des revendications 1 à 4.

9. Le jeu d'encre selon la revendication 8, qui comprend au moins une composition d'encre sombre ayant une couleur choisie parmi le groupe constitué du jaune, du cyan, du magenta, du noir, et du blanc, et ayant une teneur de colorant supérieure à 1 % en poids de la composition d'encre entière.

10. Le jeu d'encre selon la revendication 8, qui comprend au moins une composition d'encre sombre ayant une teneur de colorant supérieure à 1 % en poids de la composition d'encre entière, et au moins une composition d'encre selon l'une quelconque des revendications 1 à 4 en tant qu'encre claire, l'encre sombre et l'encre claire employant des pigments ou des colorants de couleurs similaires, et le rapport des concentrations des pigments ou des colorants pour l'encre sombre et l'encre claire étant encre sombre : encre claire = 15:1 à 4:1.
